# EUROPEAN PATENT APPLICATION

(11) **EP 2 738 009 A1**
(43) Date of publication of application: **04.06.2014**
(21) Application number: 12817116.2
(22) Date of filing: 26.07.2012
(51) Int. Cl.: B41N 1/12, C08F 2/44

(54) **COMPOSITION FOR LASER ENGRAVING, RELIEF PRINTING ORIGINAL PLATE FOR LASER ENGRAVING AND PRODUCTION METHOD THEREFOR, PRODUCTION METHOD FOR RELIEF PRINTING PLATE, AND RELIEF PRINTING PLATE**

(30) Priority: 28.07.2011 JP 2011165413
(71) Applicant: FUJIFILM Corporation, Tokyo 106-8620 (JP)
(72) Inventor: YOSHIDA Kenta, Haibara-gun Shizuoka 421-0396 (JP)
(74) Representative: HOFFMANN EITLE
(86) International application number: PCT/JP2012/068955
(87) International publication number: WO 2013/015353

(57) **Abstract**

To provide a composition for laser engraving that can give a relief printing plate having excellent ink laydown and that has excellent rinsing properties after laser engraving.

A composition for laser engraving, the composition that comprises (Component A) an acrylate oligomer; (Component B) a thermopolymerization initiator; and (Component C) at least one of the compounds represented by Formula (1) to Formula (7); the composition not comprising or comprising at more than 0 mass% but less than 2 mass% relative to the total mass of the composition (Component D) a resin having a weight-average molecular weight of at least 10,000, wherein R¹ to R¹⁸ independently denote a hydrogen atom, an alkyl group, a substituted alkyl group, an aryl group, a substituted aryl group, a heterocyclic group, or a substituted heterocyclic group, L² denotes a divalent organic group, L³ denotes a trivalent organic group, and L⁴ denotes a tetravalent organic group.

R¹-CO₂R² ( 1 )

R³O₂C-L²-CO₂R⁴ ( 2 )

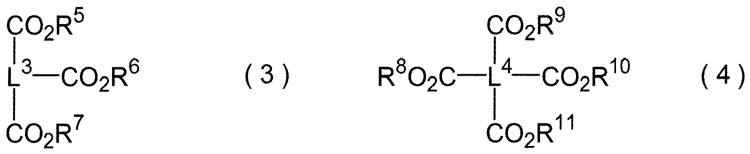

R¹²-CONHR¹³ ( 5 )

R¹⁴-SO₂NHR¹⁵ ( 6 )

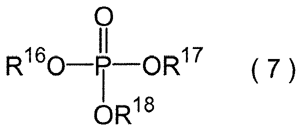

## Description

The present invention relates to a composition for laser engraving, a relief printing plate precursor for laser engraving and a process for producing same, a process for making a relief printing plate, and a relief printing plate.

A large number of so-called "direct engraving CTP methods", in which a relief-forming layer is directly engraved by means of a laser are proposed. In the method, a laser light is directly irradiated to a flexographic printing plate precursor to cause thermal decomposition and volatilization by photothermal conversion, thereby forming a concave part. Differing from a relief formation using an original image film, the direct engraving CTP method can control freely relief shapes. Consequently, when such image as an outline character is to be formed, it is also possible to engrave that region deeper than other regions, or, in the case of a fine halftone dot image, it is possible, taking into consideration resistance to printing pressure, to engrave while adding a shoulder. With regard to the laser for use in the method, a high-power carbon dioxide laser is generally used. In the case of the carbon dioxide laser, all organic compounds can absorb the irradiation energy and convert it into heat. On the other hand, inexpensive and small-sized semiconductor lasers have been developed, wherein, since they emit visible lights and near infrared lights, it is necessary to absorb a laser light and convert it into heat.

As a conventional composition for laser engraving, those described in US Application Nos. 2008/076061 and 2010/283187 are known.

It is an object of the present invention to provide a composition for laser engraving that can give a relief printing plate having excellent ink laydown and that has excellent rinsing properties after laser engraving, a relief printing plate precursor employing the composition for laser engraving, a process for making a relief printing plate employing the relief printing plate precursor, and a relief printing plate made by the plate making process.

The objects of the present invention have been attained by means described in <1>, <10> to <13>, and <14>. They are described together with <2> to <9>, <15>, and <16>, which are preferred embodiments.
<1> A composition for laser engraving, the composition comprising (Component A) an acrylate oligomer, (Component B) a thermopolymerization initiator, and (Component C) at least one of the compounds represented by Formula (1) to Formula (7), the composition not comprising or comprising at more than 0 mass% but less than 2 mass% relative to the total mass of the composition (Component D) a resin having a weight-average molecular weight of at least 10,000,

   R¹-CO₂R² ( 1 )

   R³O₂C-L²-CO₂R⁴ ( 2 )

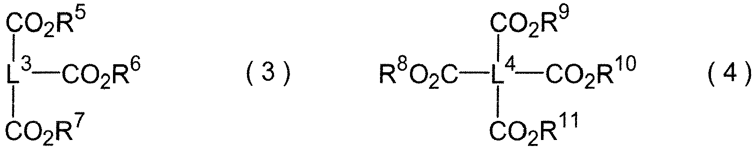

   R¹²-CONHR¹³ ( 5 )

   R¹⁴-SO₂NHR¹⁵ (6)

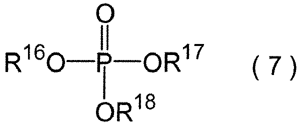

   wherein in Formula (1) to Formula (7) R¹ to R¹⁸ independently denote a hydrogen atom, an alkyl group, a substituted alkyl group, an aryl group, or a substituted aryl or heterocyclic group, L² denotes a divalent organic group, L³ denotes a trivalent organic group, and L⁴ denotes a tetravalent organic group,
<2> the composition for laser engraving according to <1> above, wherein Component A has at least two ethylenically unsaturated bonds in the molecule,
<3> the composition for laser engraving according to <1> or <2> above, wherein Component A is a urethane acrylate oligomer,
<4> the composition for laser engraving according to any one of <1> to <3> above, wherein Component B is a peroxide,
<5> the composition for laser engraving according to any one of <1> to <4> above, wherein Component C has a content of 2 to 40 mass% relative to the total mass of the composition,
<6> the composition for laser engraving according to any one of <1> to <5> above, wherein it further comprises (Component E) a monofunctional (meth)acrylate compound,
<7> the composition for laser engraving according to any one of <1> to <6> above, wherein it further comprises (Component F) a photothermal conversion agent,
<8> the composition for laser engraving according to any one of <1> to <6> above, wherein it further comprises (Component G) a filler,
<9> the composition for laser engraving according to any one of <1> to <6> above, wherein it further comprises (Component F) a photothermal conversion agent and (Component G) a filler,
<10> a relief printing plate precursor for laser engraving, the precursor comprising above a support a relief-forming layer formed from the composition for laser engraving according to any one of <1> to <9> above,
<11> a relief printing plate precursor for laser engraving, the precursor comprising above a support a crosslinked relief-forming layer formed by thermally crosslinking a relief-forming layer formed from the composition for laser engraving according to any one of <1> to <9> above,
<12> a process for producing a relief printing plate precursor for laser engraving, the process comprising a layer formation step of forming a relief-forming layer from the composition for laser engraving according to any one of <1> to <9> above, and a crosslinking step of crosslinking the relief-forming layer by means of heat to thus obtain a relief printing plate precursor comprising a crosslinked relief-forming layer,
<13> a process for making a relief printing plate, the process comprising a layer formation step of forming a relief-forming layer from the composition for laser engraving according to any one of <1> to <9> above, a crosslinking step of crosslinking the relief-forming layer by means of heat to thus obtain a relief printing plate precursor comprising a crosslinked relief-forming layer, and an engraving step of laser engraving the relief printing plate precursor comprising the crosslinked relief-forming layer to thus form a relief layer,
<14> a relief printing plate comprising a relief layer made by the process according to <13> above,
<15> the relief printing plate according to <14> above, wherein the relief layer has a thickness of at least 0.05 mm but no greater than 10 mm, and
<16> the relief printing plate according to <14> or <15> above, wherein the relief layer has a Shore A hardness of at least 50° but no greater than 90°.

In accordance with the present invention, there can be provided a composition for laser engraving that can give a relief printing plate having excellent ink laydown and that has excellent rinsing properties after laser engraving, a relief printing plate precursor employing the composition for laser engraving, a process for making a relief printing plate employing the relief printing plate precursor, and a relief printing plate made by the plate making process.

In the present invention, the notation 'lower limit to upper limit', which expresses a numerical range, means 'at least the lower limit but no greater than the upper limit', and the notation 'upper limit to lower limit' means 'no greater than the upper limit but at least the lower limit'. That is, it means a numerical range that includes the upper limit and the lower limit. Furthermore, in the present invention '(Component A) an acrylate oligomer', etc. may simply be called 'Component A', etc.

### (Composition for laser engraving)

The composition for laser engraving (hereinafter, also called simply a 'composition') of the present invention comprises (Component A) an acrylate oligomer, (Component B) a thermopolymerization initiator, and (Component C) at least one of the compounds represented by Formula (1) to Formula (7), the composition not comprising or comprising at more than 0 mass% but less than 2 mass% of the total mass of the composition (Component D) a resin having a weight-average molecular weight of at least 10,000.

It is surmised that in the composition for laser engraving of the present invention, an oligomer moiety of the acrylate oligomer (Component A) and the structure of the compound represented by Formula (1) to Formula (7) (Component C) easily interact with each other, thus making a crosslinked film flexible and thereby improving ink laydown. It is also surmised that after laser engraving, the oligomer moiety of the acrylate oligomer (Component A) and the structure of the compound represented by Formula (1) to Formula (7) (Component C) interact with each other, thus diluting a crosslinked product decomposition product such as engraving residue with the compound represented by Formula (1) to Formula (7) (Component C) to thus further reduce the viscosity, and thereby improving the rinsing properties.

R₁-CO₂R² ( 1 )

R³O₂C-L²-CO₂R⁴ ( 2 )

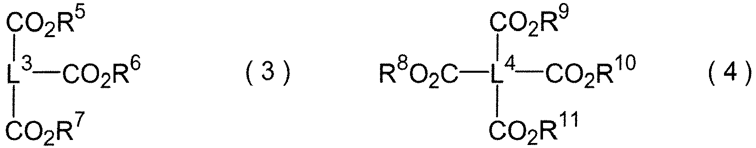

R¹²-CONHR¹³ ( 5 )

R¹⁴-SO₂NHR¹⁵ ( 6 )

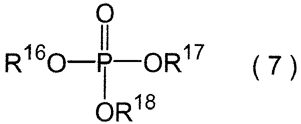

(In Formula (1) to Formula (7) R¹ to R¹⁸ independently denote a hydrogen atom, an alkyl group, a substituted alkyl group, an aryl group, or a substituted aryl or heterocyclic group, L² denotes a divalent organic group, L³ denotes a trivalent organic group, and L⁴ denotes a tetravalent organic group.)

The composition for laser engraving of the present invention may be used without any particular limitation in a wide range of other applications in addition to a relief-forming layer of a relief printing plate precursor that is subjected to laser engraving. For example, it may not only be used in formation of a relief-forming layer of a relief printing plate precursor for formation of a projection type relief by laser engraving, but also may be used in formation of another material form in which asperities or apertures are formed on the surface, for example, various types of printing plates or various types of moldings in which an image is formed by laser engraving, such as an intaglio plate, a stencil plate, or a stamp.

Among them, a preferred embodiment is use in formation of a relief-forming layer provided above an appropriate support.

In the present specification, with respect to explanation of the relief printing plate precursor, a non-crosslinked crosslinkable layer comprising Component A to Component C and having a flat surface as an image formation layer that is subjected to laser engraving is called a relief-forming layer, a layer that is formed by crosslinking the relief-forming layer is called a crosslinked relief-forming layer, and a layer that is formed by subjecting this to laser engraving so as to form asperities on the surface is called a relief layer.

Constituent components of the composition for laser engraving of the present invention are explained below.

### (Component A) Acrylate oligomer

The composition for laser engraving of the present invention comprises (Component A) an acrylate oligomer.

The acrylate oligomer is a compound having at least one, preferably at least 2, more preferably 2 to 12, and yet more preferably 2 to 6 acryloyl groups and/or methacryloyl groups.

Moreover, the molecular weight (weight-average molecular weight) of the acrylate oligomer is preferably 300 to 10,000, more preferably 500 to 7,000, and yet more preferably 1,000 to 5,000.

In the present invention, the weight-average molecular weight (Mw) and the number-average molecular weight (Mn) is measured using GPC (gel permeation chromatography) and determined using a standard polystyrene calibration curve.

The oligomer in the present invention may be any oligomer, and examples thereof include an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, an acrylate oligomer, a methacrylate oligomer, etc.), a diene-based oligomer (a butadiene oligomer, a chloroprene rubber, a pentadiene oligomer, etc.), a ring-opening polymerization type oligomer (di-, tri-, tetraethylene glycol, polyethylene glycol, polyethylimine, etc.), an addition-polymerization type oligomer (an oligoester acrylate, a polyamide oligomer, a polyisocyanate oligomer, a urethane acrylate, a polyester acrylate, and an epoxy acrylate), and an addition-condensation oligomer (a phenolic resin, an amino resin, a xylene resin, a ketone resin, etc.).

Among them, a urethane acrylate (also called a 'urethane acrylate oligomer'), a polyester acrylate (also called a 'polyester acrylate oligomer'), and an epoxy acrylate (also called an 'epoxy acrylate oligomer') are preferable, and a urethane acrylate is more preferable.

As the urethane acrylate, an aliphatic urethane acrylate and an aromatic urethane acrylate may preferably be cited. With respect to the oligomer, 'Origomar Handobukku (Oligomer Handbook)' (edited by Junji Furukawa, The Chemical Daily Co., Ltd.) may also be referred to.

As oligomer commercial products, examples of urethane acrylates include R1204, R1211, R1213, R1217, R1218, R1301, R1302, R1303, R1304, R1306, R1308, R1901, and R1150 manufactured by Dai-Ichi Kogyo Seiyaku Co., Ltd., the EBECRYL series (e.g. EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, and U200AX manufactured by Shin-Nakamura Chemical Co., Ltd., and Aronix M-1100, M-1200, M-1210, M-1310, M-1600, and M-1960 manufactured by Toagosei Co., Ltd.

Examples of polyester acrylates include the EBECRYL series (e.g. EBECRYL 770, IRR467, 81, 84, 83, 80, 675, 800, 810, 812, 1657, 1810, IRR302, 450, 670, 830, 870, 1830, 1870, 2870, IRR267, 813, IRR483, 811, etc.) manufactured by Daicel-Cytec Company Ltd. and Aronix M-6100, M-6200, M-6250, M-6500, M-7100, M-8030, M-8060, M-8100, M-8530, M-8560, and M-9050 manufactured by Toagosei Co., Ltd.

Examples of epoxy acrylates include the EBECRYL series (e.g. EBECRYL 600, 860, 2958, 3105, 3411, 3600, 3605, 3700, 3701, 3703, 3702, 3708, RDX63182, 6040, etc.) manufactured by Daicel-Cytec Company Ltd.

From the viewpoint of flexibility and brittleness of the crosslinked relief-forming layer, the content of Component A in the composition for laser engraving of the present invention is preferably 0.5 to 50 mass% of the entire nonvolatile components, more preferably 2 to 40 mass%, and yet more preferably 5 to 30 mass%. When in this range, even if the content of (Component D) a resin having a weight-average molecular weight of at least 10,000 (also called simply a 'binder polymer') in the crosslinked relief-forming layer is less than 2 mass%, rubber elasticity necessary as a printing plate can be exhibited.

### (Component B) Thermopolymerization initiator

The composition for laser engraving of the present invention comprises (Component B) a thermopolymerization initiator. As the thermopolymerization initiator, a radical polymerization initiator is preferable, and preferred examples thereof include compounds described in paragraphs 0074 to 0118 of JP-A-2008-63554.

Examples of the radical polymerization initiator include an aromatic ketone, an onium salt compound, an organic peroxide, a thio compound, a hexaarylbiimidazole compound, a ketoxime ester compound, a borate compound, an azinium compound, a metallocene compound, an active ester compound, a carbon-halogen bond-containing compound, and an azo-based compound. Among them, from the viewpoint of engraving sensitivity and good relief edge shape when applied to a relief-forming layer of a relief printing plate precursor, an organic peroxide and an azo-based compound are preferable, and an organic peroxide is particularly preferable.

Preferred examples of the organic peroxide as a thermopolymerization initiator that can be used in the present invention include peroxyester-based ones such as 3,3',4,4'-tetra(t-butylperoxycarbonyl)benzophenone, 3,3',4,4'-tetra(*t-*amylperoxycarbonyl)benzophenone, 3,3',4,4'-tetra(*t-*hexylperoxycarbonyl)benzophenone, 3,3',4,4'-tetra(*t-*octylperoxycarbonyl)benzophenone, 3,3',4,4'-tetra(cumylperoxycarbonyl)benzophenone, 3,3',4,4'-tetra(p-isopropylcumylperoxycarbonyl)benzophenone, di-*t*-butyldiperoxyisophthalate, cumene hydroperoxide, and *t*-butylperoxybenzoate.

Preferable azo compounds as a thermopolymerization initiator that can be used in the present invention include those such as 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N-*(2-hydroxyethyl)propionamide], 2,2'-azobis(N-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane).

With regard to the thermopolymerization initiator, one type may be used on its own or two or more types may be used in combination.

The content of the thermopolymerization initiator in the composition for laser engraving of the present invention is preferably 0.01 to 10 mass% relative to the total weight on a non-volatile component basis, and more preferably 0.1 to 3 mass%. When the content of the polymerization initiator is at least 0.01 mass%, an effect from the addition thereof is obtained, and crosslinking of a crosslinkable relief-forming layer proceeds promptly. Furthermore, when the content is no greater than 10 mass%, other components do not become insufficient, and printing durability that is satisfactory as a relief printing plate is obtained.

### (Component C) Compound represented by Formula (1) to Formula (7)

The composition for laser engraving of the present invention comprises at least one of the compounds represented by Formula (1) to (7) below (hereinafter, also called a 'specific plasticizer' or simply a 'plasticizer').

R¹-CO₂R² ( 1 )

R³O₂C-L²-CO₂R⁴ ( 2 )

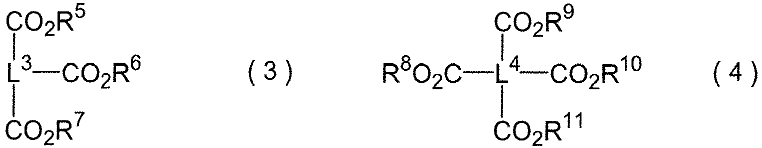

R¹²-CONHR¹³ ( 5 )

R¹⁴-SO₂NHR¹⁵ ( 6 )

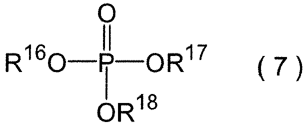

(In Formula (1) to Formula (7) R¹ to R¹⁸ independently denote a hydrogen atom, an alkyl group, a substituted alkyl group, an aryl group, or a substituted aryl or heterocyclic group, L² denotes a divalent organic group, L³ denotes a trivalent organic group, and L⁴ denote a tetravalent organic group.)

In Formula (1), R¹ to R¹⁸ independently denote a hydrogen atom, an alkyl group, a substituted alkyl group, an aryl group, a substituted aryl or heterocyclic group, or a substituted heterocyclic group.

The alkyl group preferably has 1 to 30 carbons, more preferably 1 to 24 carbons, and yet more preferably 1 to 18 carbons. The alkyl group may be a straight-chain alkyl group or a cyclic alkyl group.

Examples of the substituent of the substituted alkyl group include an alkyl group (preferably having 1 to 30 carbons, more preferably 1 to 24 carbons, and yet more preferably 1 to 18 carbons), a hydroxy group, an aryl group (preferably having 6 to 20 carbons, more preferably 6 to 14 carbons, and yet more preferably 6 to 12 carbons), a heterocyclic group (preferred examples of a heteroatom including an oxygen atom, a sulfur atom, and a nitrogen atom and being preferably a 3- to 20-membered ring, more preferably a 3 to 14-membered ring, yet more preferably a 3 to 10-membered ring, and particularly preferably a 3 to 6-membered ring), a halogen atom (examples thereof including a fluorine atom, a chlorine atom, a bromine atom, and an iodine atom), an alkoxy group (preferably having 1 to 30 carbons, more preferably 1 to 24 carbons, and yet more preferably 1 to 18 carbons), an aryloxy group (preferably having 6 to 20 carbons, more preferably 6 to 14 carbons, and yet more preferably 6 to 12 carbons), a carboxy group, an acyl group (preferably having 2 to 30 carbons, more preferably 2 to 24 carbons, and yet more preferably 2 to 18 carbons), and an alkoxycarbonyl group (preferably having 2 to 31 carbons, more preferably 2 to 25 carbons, and yet more preferably 2 to 19 carbons). Furthermore, for example, an epoxy ring may be formed at any position of the alkyl group.

Among them, preferred examples of the substituent include a hydroxy group, an alkoxy group, and an aryloxy group. The substituent may further have any of the above substituents.

The aryl group preferably has 6 to 20 carbons, more preferably 6 to 14 carbons, and yet more preferably 6 to 12 carbons. Furthermore, the substituent of the substituted aryl group is the same as the substituent of the substituted alkyl group, and preferred ranges are also the same.

Preferred examples of the heteroatom of the heterocyclic group include an oxygen atom, a nitrogen atom, and a sulfur atom, and among them an oxygen atom is more preferable. The heterocyclic group is preferably a 3 to 20-membered ring, more preferably a 3 to 14-membered ring, and yet more preferably a 3 to 10-membered ring.

The heterocycle may be monocyclic or polycyclic and is not particularly limited. Specific examples of the heterocyclic group include an epoxy group and an oxetanyl group.

The substituent of the substituted heterocyclic group is the same as the substituent of the substituted alkyl group, and preferred ranges are also the same.

R¹ to R¹⁸ are preferably independently an alkyl group, a substituted alkyl group, an aryl group, a substituted aryl or heterocyclic group, or a substituted heterocyclic group, more preferably independently an alkyl group having 2 to 12 carbons or an aryl group having 6 to 12 carbons, and particularly preferably independently an alkyl group having 3 to 8 carbons or an aryl group having 6 to 12 carbons.

L² denotes a divalent organic group, and preferred examples thereof include, but are not particularly limited to, an alkylene group, a substituted alkylene group, an arylene group, and a substituted arylene group, and a divalent group formed by removing one hydrogen atom from the alkyl group, substituted alkyl group, aryl group, or substituted aryl group cited as examples for R¹ to R¹⁸ is cited as a preferred example.

L³ denotes a trivalent organic group, and a trivalent group formed by removing one hydrogen atom from the group shown for L² is preferable. L⁴ denotes a tetravalent organic group, and a tetravalent group formed by removing two hydrogen atoms from the group shown for L² is preferable.

Furthermore, L² to L⁴ may have a heteroatom such as a nitrogen atom, a sulfur atom, or an oxygen atom in the organic group, and examples thereof include a mode having a thioether bond (-S-), an ether bond (-O-), etc. within an alkylene group.

Component C preferably has the property of being resistant to volatilization during film formation, and in order for a sufficient plasticizing effect to be exhibited it is preferable for the specific plasticizer itself to have the property of being a liquid. From this viewpoint, Component C preferably has a molecular weight of 100 to 1,000, more preferably 200 to 800, and yet more preferably 300 to 500.

Since it is preferable for Component C to have good compatibility with the acrylate oligomer (Component A), other polymerizable compounds, etc., from the viewpoint of its CLogP (octanol-water partition coefficient calculated by CLogP method) being appropriate, Component C preferably has a CLogP of 0 to 10, and more preferably 3 to 6.

Component C preferably has a melting point of no greater than room temperature (20°C). Furthermore, Component C preferably has a melting point of-50°C to 30°C, and more preferably -30°C to 20°C.

Component C preferably has a boiling point of 120°C to 600°C, more preferably 150°C to 500°C, and yet more preferably 180°C to 400°C. When the boiling point of Component C is in this range, it is resistant to volatilization due to heating when making a plate, volatility due to heat during laser engraving is excellent, the sensitivity becomes high, and there is no problem with it remaining in engraving residue, etc.

Furthermore, the content of Component C in the composition for laser engraving of the present invention is preferably 1 to 50 mass% of the entire nonvolatile components, more preferably 2 to 40 mass%, and yet more preferably 5 to 30 mass%. When the content of Component C is in this range, bleeding from a plate can be suppressed, and a sufficient plasticizing effect can be obtained.

In the present invention, Component C is more preferably a compound represented by Formula (2), Formula (3), or Formula (7).

With regard to Component C, one type thereof may be used on its own, but the use of two or more types in combination is also preferable. In addition, for example, two or more types of compounds represented by Formula (2) may be used, or a compound represented by Formula (2) and a compound represented by Formula (7) may be used in combination.

Among them, it is preferable for it to comprise at least one type of compound selected from compounds represented by Formula (2), Formula (3), and Formula (7).

Specific examples of Component C include the compounds below, but the present invention is not limited to these specific examples.

Examples of the compound represented by Formula (1) include diethylene glycol dibenzoate, butyl oleate, monoolein, *n*-decyl acetate, *n*-dodecyl acetate, 3-methoxybutyl acetate, methyl gallate, butyl gallate, stearyl gallate, ethyl acetoacetate, and benzyl epoxystearate.

Examples of the compound represented by Formula (2) include dimethyl phthalate, diethyl phthalate, dibutyl phthalate, diisobutyl phthalate, dipentyl phthalate, dihexyl phthalate, diphenyl phthalate, di-*n*-octyl phthalate, bis(2-ethylhexyl) phthalate, diisodecyl phthalate, ditridecyl phthalate, butyl benzyl phthalate, benzyl 2-ethylhexyl phthalate, ethyl phthalyl ethyl glycolate, bis(2-butoxyethyl) phthalate, dimethyl isophthalate, diethyl malonate, di-*n*-butyl malonate, dibenzyl malonate, dibutyl succinate, dioctyl succinate, dibutyl L-tartarate, bis(2-butoxyethyl) adipate, dibutyl adipate, dimethyl adipate, diisobutyl adipate, dimethyl sebacate, di-*n*-butyl sebacate, dibutyl maleate, dioctyl tetrahydrophthalate, didodecyl thiodipropionate, dimethyl thiodipropionate, dithioglycolic acid, dioctyl epoxyhexahydrophthalate, adipic acid oligoester, and polypropylene glycol oligosuccinate.

Examples of the adipic acid oligoester include ADK Cizer PN150 (ADEKA) and examples of the polypropylene glycol oligosuccinate include Nomcort 102 (The Nisshin OilliO Group, Ltd.).

Examples of the compound represented by Formula (3) include tris(2-ethylhexyl) trimellitate, tributyl trimellitate, tributyl citrate, triethyl citrate, triethyl *O-*acetylcitrate, and tributyl *O*-acetylcitrate.

Examples of the compound represented by Formula (4) include methyl biphenyltetracarboxylate and butyl biphenyltetracarboxylate.

Examples of the compound represented by Formula (5) include N-(*n-*butoxymethyl)acetamide.

Examples of the compound represented by Formula (6) include *N-*butylbenzenesulfonamide and *N*-cyclohexyl-*p*-toluenesulfonamide.

Examples of the compound represented by Formula (7) include triethyl phosphate, tributyl phosphate, trihexyl phosphate, tris(2-ethylhexyl) phosphate, tributoxyethyl phosphate, tricyclohexyl phosphate, triphenyl phosphate, tribenzyl phosphate, tricresyl phosphate, cresyl diphenyl phosphate, tris(isopropylphenyl) phosphate, tris(1,3-dichloro-2-propyl) phosphate, and tris(2-chloroethyl) phosphate.

Preferred examples of Component C are shown by the structural formulae below. In the chemical formulae below, some of the carbons (C) and hydrogens (H) are omitted.

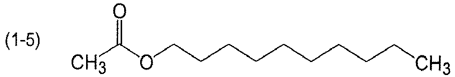

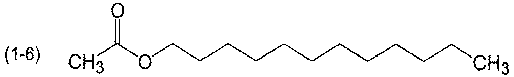

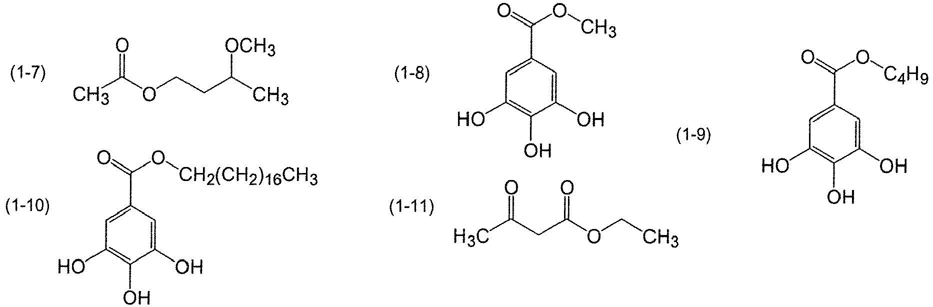

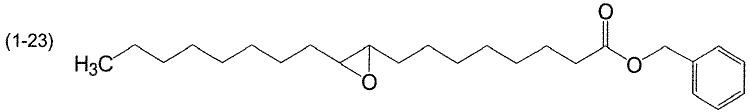

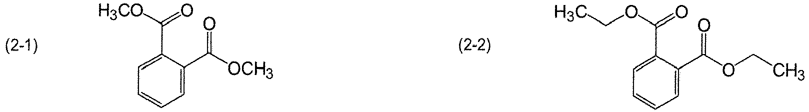

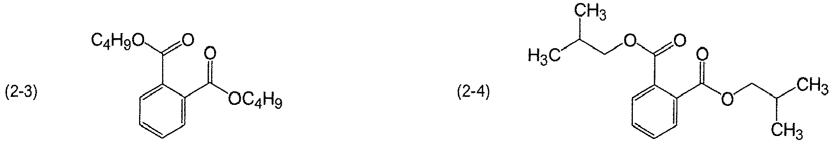

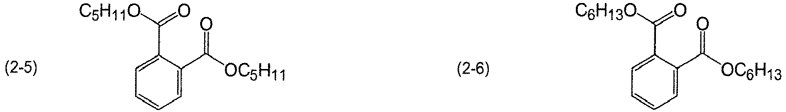

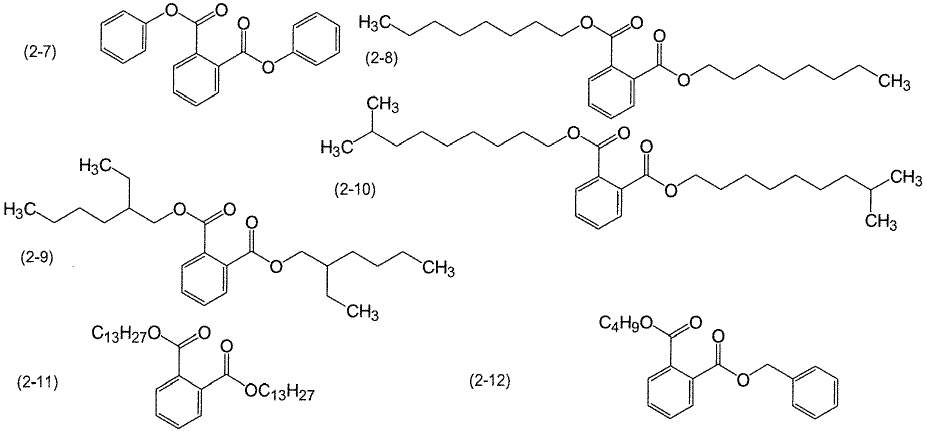

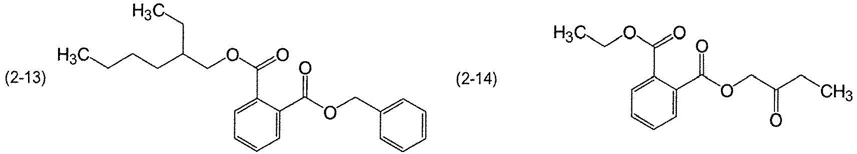

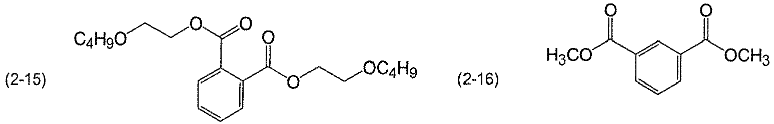

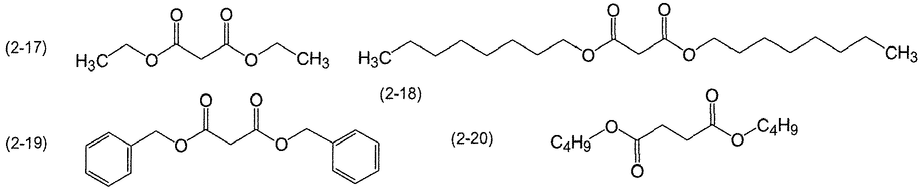

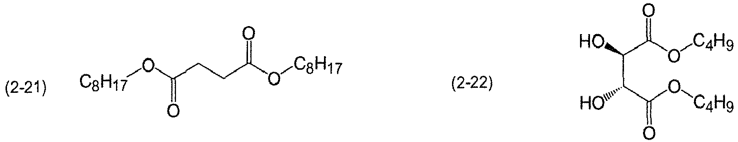

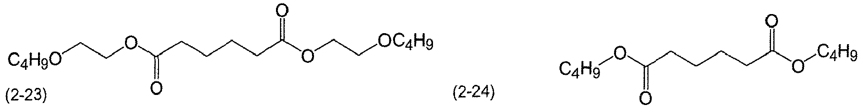

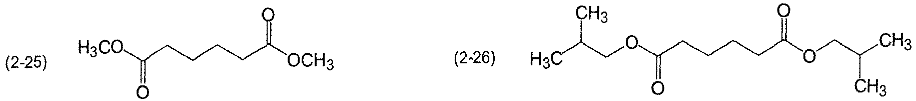

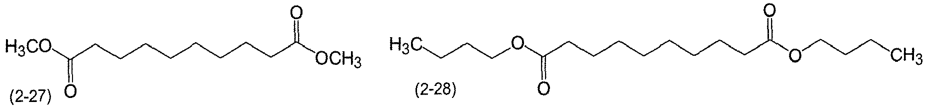

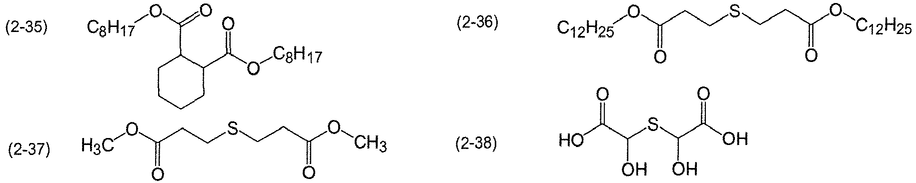

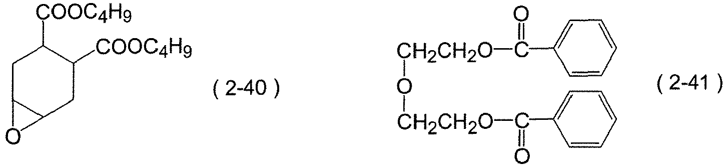

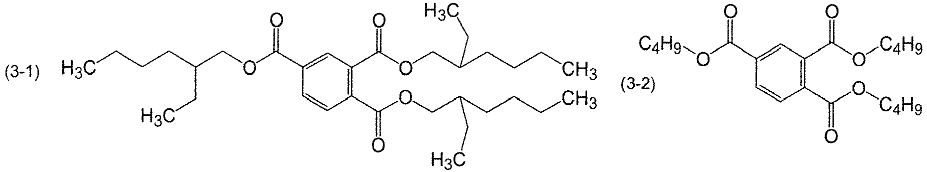

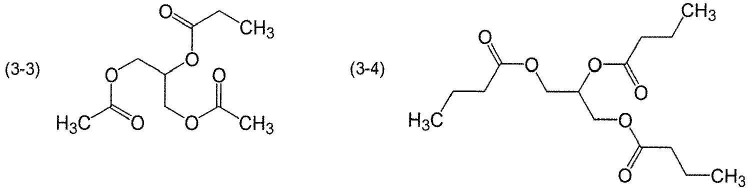

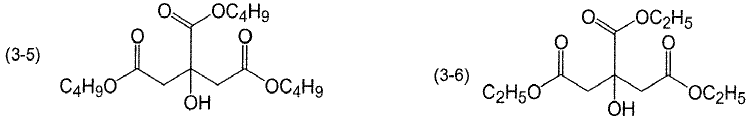

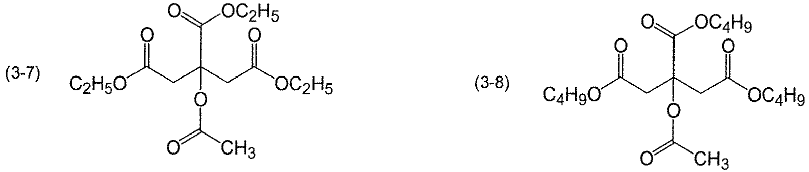

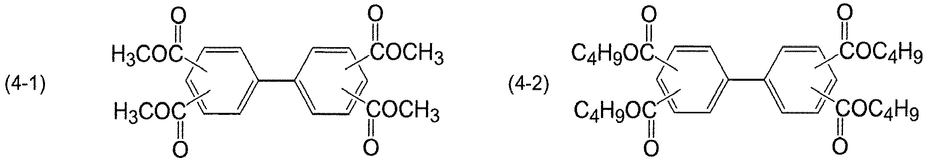

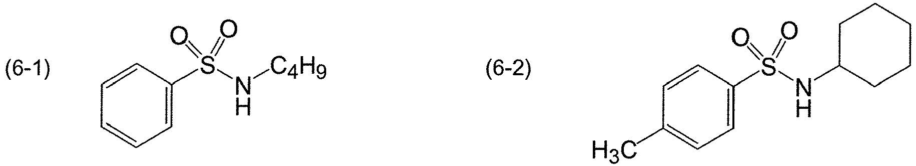

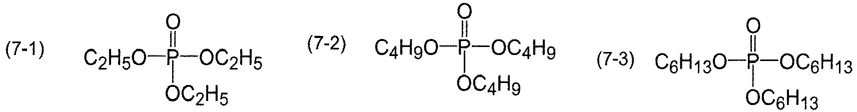

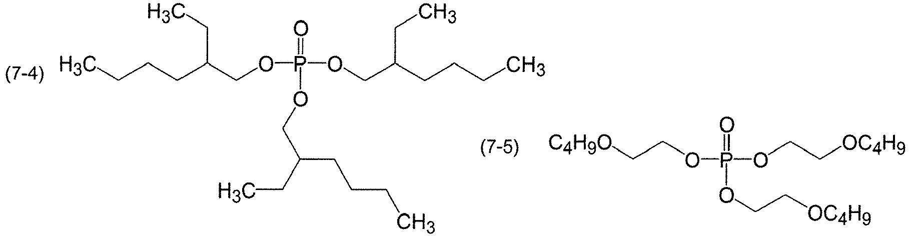

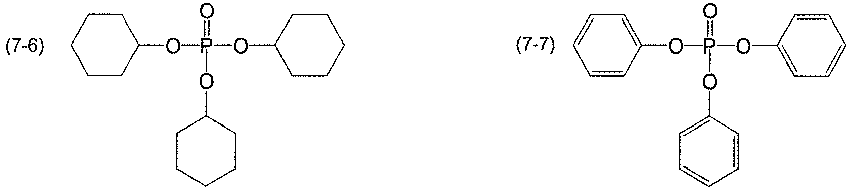

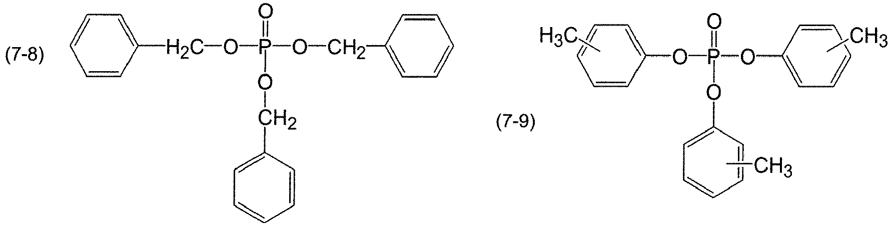

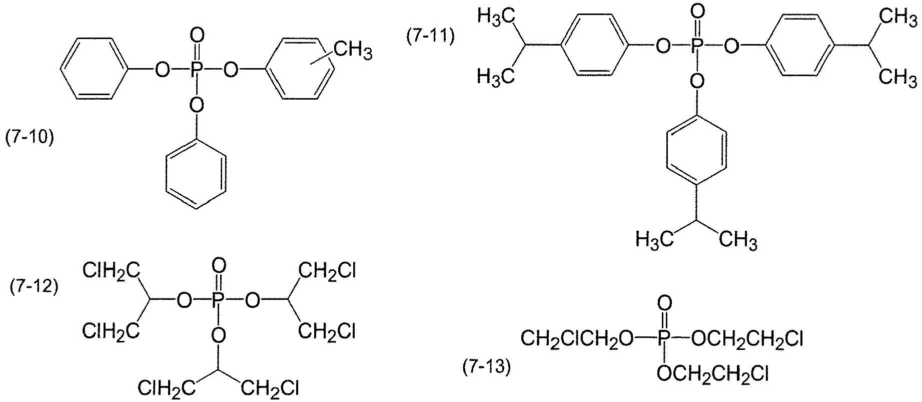

Among them, Component C is preferably (1-9), (2-3), (2-6), (2-7), (2-8), (2-15), (2-18), (2-19), (2-21), (2-22), (2-28), (2-41), (3-1), (3-3), (3-4), (3-7), (6-1), (6-2), (7-2), (7-4), (7-5), (7-6), (7-8), (7-9), or (7-10).

### (Component D) Resin having a weight-average molecular weight of at least 10,000

The composition for laser engraving of the present invention does not comprise (Component D) a resin having a weight-average molecular weight of at least 10,000 (a binder polymer) or comprises it at more than 0 mass% but less than 2 mass% relative to the total mass of the composition.

When the binder polymer is contained, the binder polymer is preferably a non-elastomer. An 'elastomer' is a polymer having a glass transition temperature of no greater than normal temperature (ref. 'Kagaku Daijiten' (Science Dictionary) 2^{nd} edition, Ed. by Foundation for Advancement of International Science, Published by Maruzen, p. 154). Therefore, a non-elastomer denotes a polymer having a glass transition temperature that exceeds normal temperature (20°C). From the viewpoint of a balance being achieved between engraving sensitivity and film formation properties, the glass transition temperature of the non-elastomer is preferably more than 20°C but no greater than 200°C, more preferably more than 20°C but no greater than 170°C, and yet more preferably 25°C to 150°C.

From the viewpoint of film formation properties, examples of the binder polymer include polyvinyl butyral (PVB) and a derivative thereof, an alcohol-soluble polyamide, a water-insoluble cellulose derivative, and an acrylic resin having a polar group in a side chain. As the binder polymer, polyvinyl butyral and a derivative thereof, an alcohol-soluble polyamide, a cellulose derivative, an epoxy resin, an acrylic resin, a polyurethane resin, etc. described in paragraphs 0017 to 0139 of JP-A-2009-262526 can be preferably used. Among them, polyvinyl butyral and a derivative thereof are preferable.

With regard to the binder polymer, one type may be used on its own or two or more types may be used in combination.

From the viewpoint of rinsing properties and flexibility, the content of Component D contained in the composition for laser engraving of the present invention is preferably either zero or greater than 0 mass% but less than 1 mass% relative to the total mass of the composition, more preferably either zero or greater than 0 mass% but less than 0.05 mass% relative to the total mass of the composition, and particularly preferably zero.

### (Component E) Monofunctional (meth)acrylate compound

The composition for laser engraving of the present invention preferably further comprises (Component E) a monofunctional (meth)acrylate compound.

A monofunctional (meth)acrylate compound may be used without limitations; examples thereof include a monofunctional aliphatic (meth)acrylate compound, a monofunctional alicyclic (meth)acrylate compound, a monofunctional aromatic (meth)acrylate compound, etc.

Examples thereof such Component E include, as the (meth)acrylic ester, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, 2-ethylhexyl (meth)acrylate, acetoxyethyl (meth)acrylate, phenyl (meth)acrylate, 2-methoxyethyl (meth)acrylate, 2-ethoxyethyl (meth)acrylate, 2-(2-methoxyethoxy)ethyl (meth)acrylate, cyclohexyl (meth)acrylate, benzyl (meth)acrylate, diethylene glycol monomethyl ether (meth)acrylate, diethylene glycol monoethyl ether (meth)acrylate, diethylene glycol monophenyl ether (meth)acrylate, triethylene glycol monomethyl ether (meth)acrylate, triethylene glycol monoethyl ether (meth)acrylate, dipropylene glycol monomethyl ether (meth)acrylate, polyethylene glycol monomethyl ether (meth)acrylate, polypropylene glycol monomethyl ether (meth)acrylate, the monomethyl ether (meth)acrylate of a copolymer of ethylene glycol and propylene glycol, N,N-dimethylaminoethyl (meth)acrylate, N,N-diethylaminoethyl (meth)acrylate, and *N,N*-dimethylaminopropyl (meth)acrylate.

Among them, from the viewpoint of a film strength, Component E is preferably an alicyclic (meth)acrylate compound, more preferably dicyclopentanyl acrylate, dicyclopentanyl methacrylate, isobornyl acrylate, or isobornyl methacrylate.

From the viewpoint of flexibility and brittleness of a crosslinked relief-forming layer, the content of Component E in the composition for laser engraving of the present invention is preferably 0.5 to 50 mass% of the entire nonvolatile components, more preferably 2 to 40 mass%, and yet more preferably 5 to 30 mass%.

### (Component F) Photothermal conversion agent

The composition for laser engraving of the present invention preferably comprises (Component F) a photothermal conversion agent. It is surmised that the photothermal conversion agent absorbs laser light and generates heat thus promoting thermal decomposition of a cured material of the resin composition for laser engraving of the present invention during laser engraving. Because of this, it is preferable to select a photothermal conversion agent that absorbs light having the wavelength of the laser that is used for engraving.

When a laser (a YAG laser, a semiconductor laser, a fiber laser, a surface emitting laser, etc.) emitting infrared at a wavelength of 700 nm to 1,300 nm is used as a light source for laser engraving using a relief printing plate precursor produced by using the composition for laser engraving in the present invention, the photothermal conversion agent is preferably a photothermal conversion agent that can absorb light having a wavelength of 700 nm to 1,300 nm.

As the photothermal conversion agent in the present invention, various types of dye or pigment are used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific examples include dyes having a maximum absorption wavelength at 700 nm to 1,300 nm, such as azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. In particular, cyanine-based colorants such as heptamethine cyanine colorants, oxonol-based colorants such as pentamethine oxonol colorants, phthalocyanine-based colorants, and dyes described in paragraphs 0124 to 0137 of JP-A-2008-63554 are preferably used.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saisin Ganryo Ouyogijutsu' (Latest Applications of Pigment Technology) (CMC Publishing, 1986), 'Insatsu Inki Gijutsu' (Printing Ink Technology) (CMC Publishing, 1984). Examples include pigments described in paragraphs 0122 to 0125 of JP-A-2009-178869. Among these pigments, carbon black is preferable.

Any carbon black, regardless of classification by ASTM (American Society for Testing and Materials) and application (e.g. for coloring, for rubber, for dry cell, etc.), may be used as long as dispersibility, etc. in the composition is stable. Carbon black includes for example furnace black, thermal black, channel black, lamp black, and acetylene black. In order to make dispersion easy, a black colorant such as carbon black may be used as color chips or a color paste by dispersing it in nitrocellulose or a binder in advance of using, as necessary, a dispersant, and such chips and paste are readily available as commercial products. Examples include carbon black include described in paragraphs 0130 to 0134 in JP-A-2009-178869.

The content of the photothermal conversion agent in the composition for laser engraving of the present invention largely depends on the size of the molecular extinction coefficient characteristic to the molecule, and is preferably 0.01 to 30 mass% relative to the total weight on a non-volatile component basis of the composition, more preferably 0.05 to 20 mass%, and yet more preferably 0.1 to 10 mass%.

### (Component G) Filler

The composition for laser engraving of the present invention preferably further comprises (Component G) a filler.

Adding the filler enables mechanical properties such as viscosity of a composition for laser engraving, and wettability and viscoelastic properties of a relief-forming layer to be adjusted. Adding the filler to the resin composition for laser engraving enables reduction in tackiness of the relief-forming layer surface, improvement of rinsing properties for engraving residue, and improvement of quality of printing by the relief printing plate to be realized. Furthermore, the use of the filler enables the breaking strength of the relief-forming layer to be improved and a relief printing plate having excellent ink transfer properties to be obtained. Furthermore, the filler may be added in order to improve the solvent resistance of the relief-forming layer obtained.

In the present invention, a filler also satisfying a photothermal conversion agent such as carbon black, etc. is not classified in (Component G) a filler, but is classified in (Component F) a photothermal conversion agent.

Fillers used in the present invention include organic fillers and inorganic fillers.

Examples of the organic fillers include low density polyethylene particles, high density polyethylene particles, polystyrene particles, various organic pigments, micro balloons, urea-formalin fillers, polyester particles, cellulose fillers, organic metals, etc.

As organic pigments, known ones are cited, including indigo-based pigment, quinacridone-based pigment, dioxazine-based pigment, isoindolinone-based pigment, quinophthalone-based pigment, dyed lake pigment, azine pigment, nitroso pigment, nitro pigment, natural pigment, fluorescent pigment, etc. An inorganic pigment may be contained.

Examples of the inorganic fillers include alumina, titania, zirconia, kaolin, calcined kaolin, talc, pagodite, diatomite, calcium carbonate, aluminum hydroxide, magnesium hydroxide, zinc oxide, lithopone, amorphous silica, colloidal silica, calcined gypsum, silica, magnesium carbonate, titanium oxide, alumina, barium carbonate, barium sulfate, mica, etc.

Among them, silica or alumina is preferable, and silica is particularly preferable.

It is preferable, for the purpose of forming by a laser engraving method a pattern that exists on the surface of a relief-forming layer or pierces a relief-forming layer, to add porous inorganic particles having a number-average particle size of at least 5 nm but no greater than 10 µm or nonporous inorganic particles having a primary particle number-average particle size of at least 5 nm but no greater than 100 nm, both of which have excellent adsorptive removal properties for tacky liquid residue formed during laser engraving.

Here, 'porous inorganic particles' in the present invention means inorganic particles having a pore volume of at least 0.1 mL/g. In the present invention, pore volume is obtained from a nitrogen adsorption isotherm at -196°C by a nitrogen adsorption method.

The pore volume of the porous inorganic particles is preferably in the range of 0.1 mL/g to 10 mL/g, and more preferably 0.2 mL/g to 5 mUg. When porous inorganic particles having a pore volume of at least 0.1 mL/g are used, the amount of adsorption of tacky liquid residue formed during laser engraving becomes sufficient. When the pore volume is no greater than 10 mL/g, it is possible to ensure that the porous inorganic particles have mechanical strength.

The number-average particle size of the porous inorganic particles is preferably at least 100 nm but no greater than 10 µm, and more preferably at least 300 nm but no greater than 5 µm.

The porous inorganic particles are not particularly limited, but examples thereof include porous silica, mesoporous silica, silica-zirconia porous gel, porous alumina, porous glass, and zeolite.

With regard to the porous inorganic particles, one type thereof or two or more types thereof in combination may be used.

Here, 'nonporous inorganic particles' in the present invention means inorganic particles having a pore volume of less than 0.1 mL/g.

The number-average particle size of the nonporous inorganic particles is preferably 10 nm to 100 nm, and more preferably 10 nm to 50 nm.

As a material for the nonporous inorganic particles, for example, at least one type selected from alumina, silica, zirconium oxide, barium titanate, strontium titanate, titanium oxide, silicon nitride, boron nitride, silicon carbide, chromium oxide, vanadium oxide, tin oxide, bismuth oxide, germanium oxide, aluminum borate, nickel oxide, molybdenum oxide, tungsten oxide, iron oxide, and cerium oxide is preferably contained as a main component.

The nonporous inorganic particles are preferably nonporous inorganic particles produced using the above-mentioned material by any one of a flame hydrolysis method, an arc method, a plasma method, a precipitation method, a gelling method, and a molten solid method. The flame hydrolysis method, the arc method, and the plasma method are also called thermal decomposition methods or high temperature methods (dry methods). The precipitation method and the gelling method are also called wet methods. Among them, a dry method and, in particular, a flame hydrolysis method is preferable.

With regard to the nonporous inorganic particles, one type or two or more types thereof in combination may be used, and they may be used in combination with the porous inorganic particles.

When porous or nonporous inorganic particles having a number-average particle size in the above-mentioned range are used, there are no problems such as increase in viscosity, inclusion of bubbles, or formation of a large amount of dust, and the surface of a relief-forming layer will not have unevenness.

The number-average particle size of fillers can be measured a known method, and, for example, may be measured by using a laser-scattering type particle size distribution analyzer.

The particle shape of the fillers is not particularly limited, and particles having a spherical form, a flat form, an acicular form, an amorphous form, or projections on the surface may be used. From the viewpoint of abrasion resistance in particular, spherical particles are preferable.

It is also possible to subject the surface of inorganic particles to a surface modification treatment by coating with a silane coupling agent, a titanium coupling agent, or another organic compound, thus making particles hydrophilic or hydrophobic. With regard to these fillers, one type or two or more types thereof may be used.

When fillers are used in the composition for laser engraving of the present invention, from the viewpoint of a balance being achieved between removability of residue and film flexibility, the content of the fillers is preferably 0.01 to 30 mass% in the total non-volatile components of the composition for laser engraving, more preferably 0.05 to 15 mass%, and yet more preferably 0.1 to 5 mass%.

### <Solvent>

The composition for laser engraving of the present invention may comprises a solvent, but preferably does not comprise a solvent. 'Non-volatile components' of the composition for laser engraving of the present invention denotes all components excluding the solvent.

Specific preferred examples of the solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N,N-*dimethylacetamide, N-methylpyrrolidone, dimethyl sulfoxide, methanol, ethanol, 1-propanol, 2-propanol, 1-butanol, 1-methoxy-2-propanol, ethylene glycol, diethylene glycol, and 1,3-propanediol.

### <Other additives>

The resin composition for laser engraving of the present invention may comprise as appropriate various types of known additives as long as the effects of the present invention are not inhibited. Examples include a filler, a wax, a process oil, an a metal oxide, an antiozonant, an anti-aging agent, a thermopolymerization inhibitor, and a colorant.

One type of these other additives may be used on its own or two more types may be used in combination.

In addition, by using a co-sensitizer, the sensitivity when the composition for laser engraving is cured by light is f urther improved.

Further, during the production and preservation of composition, it is preferable that a small amount of thermal polymerization inhibitor be added for preventing unnece ssary thermal polymerization of the polymerizable compound.

For the purpose of coloring the composition for laser engraving, colorant such as dye or pigment may be added. Accordingly, properties such as visibility of the image section and aptitude for an image density measuring machine can be improved.

### (Relief printing plate precursor for laser engraving)

A first embodiment of the relief printing plate precursor for laser engraving of the present invention comprises a relief-forming layer formed from the composition for laser engraving of the present invention.

A second embodiment of the relief printing plate precursor for laser engraving of the present invention comprises a crosslinked relief-forming layer formed by crosslinking a relief-forming layer formed from the composition for laser engraving of the present invention.

In the present invention, the 'relief printing plate precursor for laser engraving' means both or one of a relief printing plate precursor having a crosslinkable relief-forming layer formed from the composition for laser engraving in a state before being crosslinked and a relief printing plate precursor in a state in which it is cured by light or heat.

The relief printing plate precursor for laser engraving of the present invention is a relief printing plate precursor having a crosslinkable relief-forming layer cured by heat.

In the present invention, the 'relief-forming layer' means a layer in a state before being crosslinked, that is, a layer formed from the resin composition for laser engraving of the present invention, which may be dried as necessary.

The 'relief printing plate' is made by laser engraving the relief printing plate precursor having the crosslinked relief-forming layer.

In the present invention, the "crosslinked relief-forming layer" refers to a layer obtained by crosslinking the aforementioned relief-forming layer. The crosslinking can be performed by heat. Moreover, the crosslinking is not particularly limited only if it is a reaction that cures the resin composition, and is a general idea that includes the crosslinked structure by the reaction of Component A with each other, the reaction of Component A with Component E, and the reaction of Component E with each other, etc., forming a crosslinked structure by the reaction of Component A with the other component is preferable.

Moreover, in the present invention, the 'relief layer' means a layer of the relief printing plate formed by engraving using a laser, that is, the crosslinked relief-forming layer after laser engraving.

A relief printing plate precursor for laser engraving of the present invention comprises a relief-forming layer formed from the composition for laser engraving of the present invention, which has the above-mentioned components. The (crosslinked) relief-forming layer is preferably provided above a support.

The relief printing plate precursor for laser engraving may further comprise, as necessary, an adhesive layer between the support and the relief-forming layer and, above the (crosslinked) relief-forming layer, a slip coat layer and a protection film.

### <Relief-forming layer>

The relief-forming layer is a layer formed from the composition for laser engraving of the present invention, and is preferably crosslinkable by heat.

As a mode in which a relief printing plate is prepared using the relief printing plate precursor for laser engraving, a mode in which a relief printing plate is prepared by crosslinking a relief-forming layer to thus form a relief printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a relief printing plate having a relief layer with a sharp shape after laser engraving.

The relief-forming layer may be formed by molding the composition for laser engraving that has the above-mentioned components for a relief-forming layer into a sheet shape or a sleeve shape. The relief-forming layer is usually provided above a support, which is described later, but it may be formed directly on the surface of a member such as a cylinder of equipment for plate producing or printing or may be placed and immobilized thereon, and a support is not always required.

A case in which the relief-forming layer is mainly formed in a sheet shape is explained as an example below.

### <Support>

A material used for the support of the relief printing plate precursor for laser engraving is not particularly limited, but one having high dimensional stability is preferably used, and examples thereof include metals such as steel, stainless steel, or aluminum, plastic resins such as a polyester (e.g. polyethylene terephthalate (PET), polybutylene terephthalate (PBT), or polyacrylonitrile (PAN)) or polyvinyl chloride, synthetic rubbers such as styrene-butadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

### <Adhesive layer>

An adhesive layer may be provided between the relief-forming layer and the support for the purpose of strengthening the adhesion between the two layers.

Examples of materials (adhesives) that can be used in the adhesive layer include those described in 'Handbook of Adhesives', Second Edition, Ed by I. Skeist, (1977).

### <Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 µm, and more preferably 50 to 200 µm. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

### (Process for producing relief printing plate precursor for laser engraving)

Formation of a relief-forming layer in the relief printing plate precursor for laser engraving is not particularly limited, and examples thereof include a method in which the composition for laser engraving is prepared, solvent is removed from this coating solution composition for laser engraving, and it is melt-extruded onto a support. Alternatively, a method may be employed in which the composition for laser engraving is cast onto a support, and this is dried in an oven to thus remove solvent from the composition.

Among them, the process for producing a relief printing plate precursor for laser engraving of the present invention is preferably a production process comprising a layer formation step of forming a relief-forming layer from the composition for laser engraving of the present invention and a crosslinking step of crosslinking the relief-forming layer by means of heat to thus obtain a relief printing plate precursor having a crosslinked relief-forming layer.

Subsequently, as necessary, a protection film may be laminated on the crosslinked relief-forming layer. Laminating may be carried out by compression-bonding the protection film and the crosslinked relief-forming layer by means of heated calendar rollers, etc. or putting a protection film into intimate contact with a crosslinked relief-forming layer whose surface is impregnated with a small amount of solvent.

When a protection film is used, a method in which a relief-forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

### <Layer formation step>

The process for making a relief printing plate for laser engraving of the present invention preferably comprises a layer formation step of forming a relief-forming layer from the composition for laser engraving of the present invention.

Preferred examples of a method for forming the relief-forming layer include a method in which the composition for laser engraving of the present invention is prepared, solvent is removed as necessary from this resin composition for laser engraving, and it is then melt-extruded onto a support and a method in which the composition for laser engraving of the present invention is prepared, the composition for laser engraving of the present invention is cast onto a support, and this is dried in an oven to thus remove solvent.

The resin composition for laser engraving may be produced by, for example, dissolving Component A to Component C, and as optional components such as Component D to Component G, etc. in an appropriate solvent, and then dissolving, or mixing Component A to Component C, and as optional components such as Component D to Component G, etc. Since it is necessary to remove most of the solvent component in a stage of producing a relief printing plate precursor, it is preferable to use as the solvent a volatile low-molecular-weight alcohol (e.g. methanol, ethanol, *n*-propanol, isopropanol, propylene glycol monomethyl ether), etc., and adjust the temperature, etc. to thus reduce as much as possible the total amount of solvent to be added.

The thickness of the (crosslinked) relief-forming layer in the relief printing plate precursor for laser engraving before and after crosslinking is preferably at least 0.05 mm but no greater than 10 mm, more preferably at least 0.05 mm but no greater than 7 mm, and yet more preferably at least 0.05 mm but no greater than 3 mm.

### <Crosslinking step>

The process for making a relief printing plate for laser engraving of the present invention is preferably a production process that comprises a crosslinking step of crosslinking by heating the relief-forming layer to thus obtain a relief printing plate precursor having a crosslinked relief-forming layer. The relief-forming layer may be crosslinked by heating the relief printing plate precursor for laser engraving (step of crosslinking by means of heat). As heating means for carrying out crosslinking by heat, there can be cited a method in which a printing plate precursor is heated in a hot air oven or a far-infrared oven for a predetermined period of time and a method in which it is put into contact with a heated roller for a predetermined period of time.

Due to the relief-forming layer being thermally crosslinked, firstly, a relief formed after laser engraving becomes sharp and, secondly, tackiness of engraving residue formed during laser engraving is suppressed.

### (Relief printing plate and process for making same)

The process for making a relief printing plate of the present invention preferably comprises a step of preparing the relief printing plate precursor for laser engraving, and a step of forming a relief layer by laser-engraving the crosslinked relief-forming layer (engraving step).

The relief printing plate of the present invention is a relief printing plate having a relief layer crosslinked and laser engraved a layer consisting of the composition for laser engraving of the present invention, and is preferably a relief printing plate made by the process for making a relief printing plate of the present invention.

The relief printing plate of the present invention may suitably employ an aqueous ink when printing.

The layer formation step and the crosslinking step in the process for making a relief printing plate of the present invention mean the same as the layer formation step and the crosslinking step in the above-mentioned process for producing a relief printing plate precursor for laser engraving, and preferred ranges are also the same.

### <Engraving step>

The process for producing a relief printing plate of the present invention preferably comprises an engraving step of laser-engraving the relief printing plate precursor having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.

As the infrared laser used in the engraving step, from the viewpoint of productivity, cost, etc., a carbon dioxide laser (CO₂ laser) or a semiconductor laser is preferable. In particular, a fiber-coupled semiconductor infrared laser (FC-LD) is preferably used. In general, compared with a CO₂ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm may be used, but one having a wavelength of 800 to 1,200 nm is preferable, one having a wavelength of 860 to 1,200 nm is more preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2^{nd} Edition' (The Laser Society of Japan), 'Jitsuyo Laser Gijutsu' (Applied Laser Technology) (The Institute of Electronics and Communication Engineers), etc.

Moreover, as plate making equipment comprising a fiber-coupled semiconductor laser that can be used suitably in the process for making a relief printing plate employing the relief printing plate precursor of the present invention, those described in detail in JP-A-2009-172658 and JP-A-2009-214334 can be cited.

The process for making a relief printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid containing water as a main component.

Drying step: a step of drying the engraved relief layer.

Post-crosslinking step: a step of further crosslinking the relief layer by applying energy to the engraved relief layer.

After the above-mentioned engraving step, since engraving residue is attached to the engraved surface, a rinsing step of washing off engraving residue by rinsing the engraved surface with water or a liquid containing water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin letterpress plate processor, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably 2 to 14, more preferably 3 to 13.5, yet more preferably 4 to 13.2, and particularly preferably 5 to 12.5. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid preferably comprises a surfactant. From the viewpoint of removability of engraving residue and little influence on a relief printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

The betaine compound is preferably a compound represented by Formula (Be-1) below and/or a compound represented by Formula (Be-2) below. 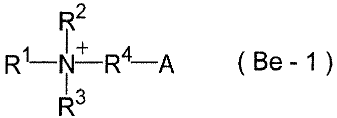 (In Formula (Be-1), R¹ to R³ independently denote a monovalent organic group, R⁴ denotes a single bond or a divalent linking group, A denotes PO(OR⁵)O⁻, OPO(OR⁵)O⁻, O⁻, COO⁻, or SO₃⁻, R⁵ denotes a hydrogen atom or a monovalent organic group, and two or more groups of R¹ to R³ may be bonded to each other to form a ring.) 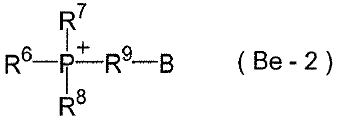 (In Formula (Be-2), R⁶ to R⁸ independently denote a monovalent organic group, R⁹ denotes a single bond or a divalent linking group, B denotes PO(OR¹⁰)O⁻, OPO(OR¹⁰)O⁻, O⁻, COO⁻, or SO₃⁻, R¹⁰ denotes a hydrogen atom or a monovalent organic group, and two or more groups of R⁶ to R⁸ may be bonded to each other to form a ring.)

The compound represented by Formula (Be-1) above or the compound represented by Formula (Be-2) above is preferably a carboxybetaine compound, a sulfobetaine compound, a phosphobetaine compound, an amine oxide compound, or a phosphine oxide compound. In the present invention, the structures of N=O of an amine oxide compound and P=O of a phosphine oxide compound are considered to be N⁺-O⁻ and P⁺-O⁻ respectively.

R¹ to R³ in Formula (Be-1) above independently denote a monovalent organic group. Two or more groups of R¹ to R³ may be bonded to each other to form a ring, but it is preferable that no ring is formed.

The monovalent organic group denoted by R¹ to R³ is not particularly limited, but is preferably an alkyl group, a hydroxy group-containing alkyl group, an alkyl group having an amide bond in an alkyl chain, or an alkyl group having an ether bond in an alkyl chain, and is more preferably an alkyl group, a hydroxy group-containing alkyl group, or an alkyl group having an amide bond in an alkyl chain.

Furthermore, the alkyl group as the monovalent organic group may have a straight chain, branched, or cyclic structure.

Moreover, it is particularly preferable that two of R¹ to R³ are methyl groups, that is, a compound represented by Formula (Be-1) has an N,N-dimethyl structure. When it has the above-mentioned structure, particularly good rinsing properties are exhibited.

R⁴ in Formula (Be-1) above denotes a single bond or a divalent linking group, and is a single bond when a compound represented by Formula (Be-1) is an amine oxide compound.

The divalent linking group denoted by R⁴ is not particularly limited, and is preferably an alkylene group or a hydroxy group-containing alkylene group, more preferably an alkylene group having 1 to 8 carbon atoms or a hydroxy group-containing alkylene group having 1 to 8 carbon atoms, and yet more preferably an alkylene group having 1 to 3 carbon atoms or a hydroxy group-containing-alkylene group having 1 to 3 carbon atoms.

A in Formula (1) above denotes PO(OR⁵)O⁻, OPO(OR⁵)O⁻, O⁻, COO⁻, or SO₃⁻, and is preferably O⁻, COO⁻, or SO₃⁻, and more preferably COO⁻.

When A is O⁻, R⁴ is preferably a single bond.

R⁵ in PO(OR⁵)O⁻ and OPO(OR⁵)O⁻ denotes a hydrogen atom or a monovalent organic group, and is preferably a hydrogen atom or an alkyl group having one or more unsaturated fatty acid ester structures.

Furthermore, R⁴ is preferably a group that does not have PO(OR⁵)O⁻, OPO(OR⁵)O⁻, O⁻, COO⁻, or SO₃⁻.

R⁶ to R⁸ in Formula (Be-2) above independently denote a monovalent organic group. Two or more groups of R⁶ to R⁸ may be bonded to each other to form a ring, but it is preferable that no ring is formed.

The monovalent organic group denoted by R⁶ to R⁸ is not particularly limited, but is preferably an alkyl group, an alkenyl group, an aryl group, or a hydroxy group, and more preferably an alkenyl group, an aryl group, or a hydroxy group.

Furthermore, the alkyl group as the monovalent organic group may have a straight chain, branched, or cyclic structure.

It is particularly preferable that two of R⁶ to R⁸ are aryl groups.

R⁹ in Formula (Be-2) above denotes a single bond or a divalent linking group, and is a single bond when a compound represented by Formula (2) is a phosphine oxide compound.

The divalent linking group denoted by R⁹ is not particularly limited, but is preferably an alkylene group or a hydroxy group-containing alkylene group, more preferably an alkylene group having 1 to 8 carbon atoms or a hydroxy group-containing alkylene group having 1 to 8 carbon atoms, and yet more preferably an alkylene group having 1 to 3 carbon atoms or a hydroxy group-containing alkylene group having 1 to 3 carbon atoms.

B in Formula (Be-2) above denotes PO(OR¹⁰)O⁻, OPO(OR¹⁰)O⁻, O⁻, COO⁻, or SO₃⁻, and is preferably O⁻.

R⁹ is preferably a single bond when B is O⁻.

R¹⁰ in PO(OR¹⁰)O⁻ and OPO(OR¹⁰)O⁻ denotes a hydrogen atom or a monovalent organic group, and is preferably a hydrogen atom or an alkyl group having one or more unsaturated fatty acid ester structures.

Furthermore, R⁹ is preferably a group that does not have PO(OR¹⁰)O⁻, OPO(OR¹⁰)O⁻, O⁻, COO⁻, or SO₃⁻.

A compound represented by Formula (Be-1) is preferably a compound represented by Formula (Be-3) below. 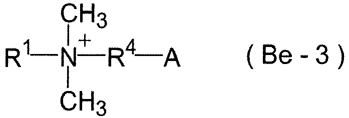 (In Formula (Be-3), R¹ denotes a monovalent organic group, R⁴ denotes a single bond or a divalent linking group, A denotes PO(OR⁵)O⁻, OPO(OR⁵)O⁻, O⁻, COO⁻, or SO₃⁻, and R⁵ denotes a hydrogen atom or a monovalent organic group.)

R¹, A, and R⁵ in Formula (Be-3) have the same meanings as R¹, A, and R⁵ in Formula (Be-1) above, and preferred ranges are also the same.

A compound represented by Formula (Be-2) is preferably a compound represented by Formula (Be-4) below. 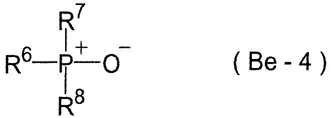 (In Formula (Be-4), R⁶ to R⁸ independently denote an alkyl group, an alkenyl group, an aryl group, or a hydroxy group. In addition, not all of R⁶ to R⁸ are the same groups.)

R⁶ to R⁸ in Formula (Be-4) above independently denote an alkyl group, an alkenyl group, an aryl group, or a hydroxy group, and are preferably an alkenyl group, an aryl group, or a hydroxy group.

Specific examples of the compound represented by Formula (Be-1) and the compound represented by Formula (Be-2) include the compounds below.

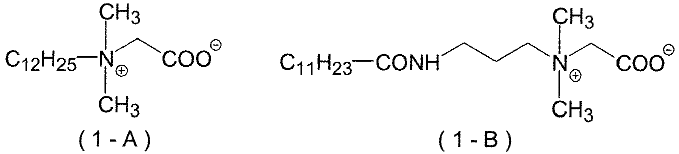

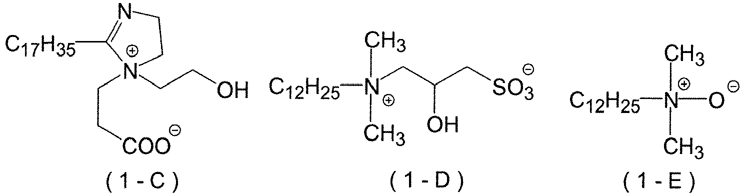

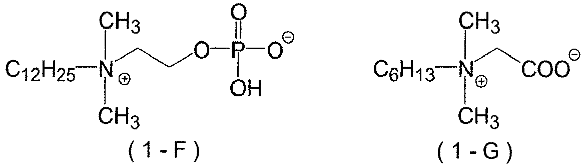

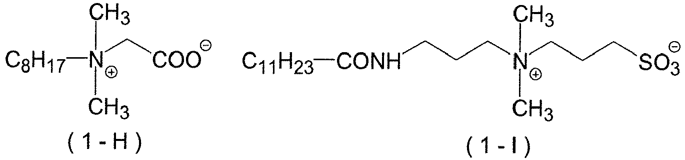

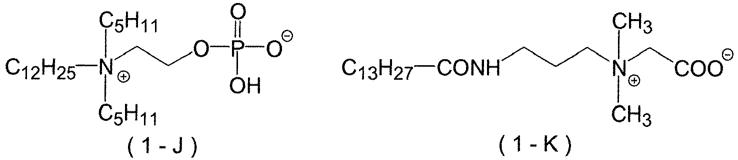

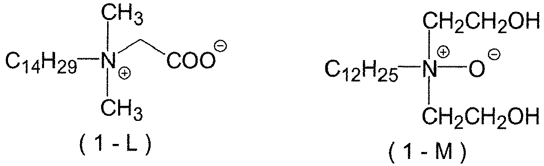

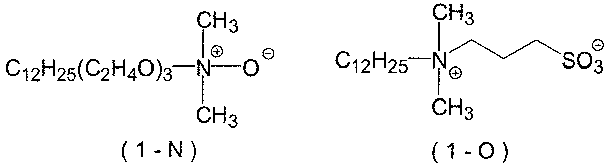

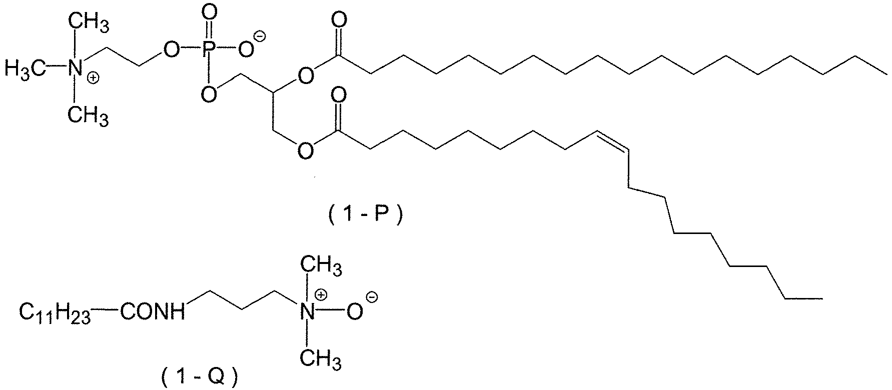

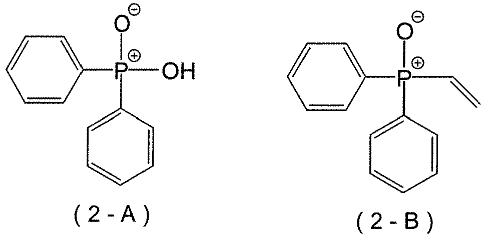

Furthermore, examples of the surfactant also include known anionic surfactants, cationic surfactants, amphoteric surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 mass% relative to the total weight of the rinsing liquid, and more preferably 0.05 to 10 mass%.

The relief printing plate of the present invention having a relief layer can be obtained as described above.

From the viewpoint of satisfying suitability for various aspects of printing, such as abrasion resistance and ink transfer properties, the thickness of the relief layer of the relief printing plate is preferably 0.05 to 10 mm, more preferably 0.05 to 7 mm, and yet more preferably 0.05 to 3 mm.

Furthermore, the Shore A hardness of the relief layer of the relief printing plate is preferably 50° to 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured by a durometer (a spring type rubber hardness meter) that presses an indenter (called a pressing needle or indenter) into the surface of a measurement target at 25°C so as to deform it, measures the amount of deformation (indentation depth), and converts it into a numerical value.

The relief printing plate of the present invention is particularly suitable for printing by a flexographic printer using an aqueous ink, but printing is also possible when it is carried out by a letterpress printer using any of aqueous inks, oil-based inks, and UV inks, and printing is also possible when it is carried out by a flexographic printer using a UV ink. The relief printing plate of the present invention has excellent rinsing properties, there is little or no engraving residue, and printing durability are excellent, and printing can be carried out for a long period of time without plastic deformation of the relief layer or degradation of printing durability.

### Examples

The present invention is explained in further detail below by reference to Examples, but the present invention should not be construed as being limited to these Examples.

### (Example 1)

### <Preparation of printing plate precursor for laser engraving>

EBECRYL 230 (20.0 parts by mass), Perbutyl Z (2.5 parts by mass), di-*n*-octyl phthalate (15.0 parts by mass), isobornyl acrylate (25.0 parts by mass), EC600JD (10.0 parts by mass), and AEROSIL R8200 (7.0 parts by mass) were mixed and cast into a mold so as to give a thickness of about 1.0 mm. This was placed in an oven and heated at 100°C for 3 hours, thus giving a relief printing plate precursor for laser engraving.

### <Preparation of relief printing plate>

As a carbon dioxide laser (CO₂ laser) engraving machine, an ML-9100 series high quality CO₂ laser marker (Keyence Corporation) was used. After a protective film was peeled off from a relief printing plate precursor for laser engraving, a 1 cm square solid printed area was raster-engraved using the carbon dioxide laser engraving machine under conditions of an output of 12 W, a head speed of 200 mm/sec, and a pitch setting of 2,400 DPI.

When the Shore A hardness of the relief layer was measured by the above measurement method, it was found to be 70°. Measurement of Shore A hardness was also carried out in the same manner in the Examples and Comparative Examples below.

### <Evaluation of rinsing properties>

A rinsing liquid was prepared by mixing water and betaine compound (1-B) below so that the content of betaine compound (1-B) was 1 mass % of the total rinsing liquid.

The rinsing liquid was dropped (about 100 mL/m²) by means of a pipette onto a relief printing plate engraved by the above method so that the plate surface became uniformly wet, and it was immediately rubbed using a toothbrush (Clinica Toothbrush Flat, Lion Corporation) 10 times (15 sec) in parallel to the plate with a load of 100 gf. Subsequently, the plate face was washed with running water, moisture on the plate face was removed, and it was dried naturally for approximately 1 hour.

After the rinsing step, the surface of the naturally dried plate was examined using a 100x microscope (Keyence Corporation), and unremoved residue on the plate was evaluated. The evaluation criteria were as follows.

When there was no residue the evaluation was A, when there was a small amount of residue the evaluation was B, and when hardly any residue could be removed the evaluation was C; evaluations other than C were acceptable.

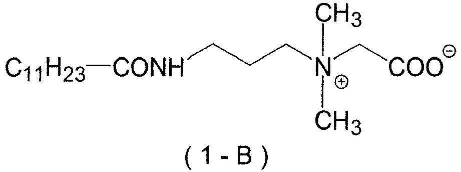

### <Evaluation of ink laydown>

A relief printing plate that had been obtained was set in a printer (Model ITM-4, IYO KIKAI SEISAKUSHO Co., Ltd.), as the ink Aqua SPZ16 Red aqueous ink (Toyo Ink Manufacturing Co., Ltd.) was used without dilution, and printing was carried out continuously using Full Color Form M 70 (Nippon Paper Industries Co., Ltd., thickness 100 µm) as the printing paper, and the degree of ink attachment in a solid printed area on the printed material at 1,000 m from the start of printing was compared by visual inspection.

When there was uniformity without unevenness in density the evaluation was A, when there was slight unevenness the evaluation was B, and when there was obvious unevenness the evaluation was C; evaluations other than C were acceptable levels.

### <Evaluation of printing durability>

A relief printing plate that had been obtained was set in a printer (Model ITM-4, IYO KIKAI SEISAKUSHO Co., Ltd.), as the ink Aqua SPZ16 Red aqueous ink (Toyo Ink Manufacturing Co., Ltd.) was used without dilution, printing was carried out continuously using Full Color Form M 70 (Nippon Paper Industries Co., Ltd., thickness 100 µm) as the printing paper, and a highlight of 1% to 10% was confirmed for the printed material. The end of printing was defined as being the point when an unprinted halftone occurred, and the length (m; meters) of paper printed up to the end of printing was used as an indicator. The larger the value, the better the printing durability.

### (Examples 2 to 45 and Comparative Examples 1 to 4)

Compositions for laser engraving, relief printing plate precursors for laser engraving, and relief printing plates of Examples 2 to 45 and Comparative Examples 1 to 5 were prepared by the same method as in Example 1 except that Component A to Component G were the components described in Table 1.

Furthermore, rinsing properties, ink laydown, and printing durability were evaluated by the same method as in Example 1.

Moreover, the Shore A hardness of the relief layers of the relief printing plates thus obtained was measured by the same method as in Example 1.

The evaluation results are summarized in Table 2.

**(Table 1)**

| | Composition | | | | | | |
|---|---|---|---|---|---|---|---|
| | (Component A) acrylate oligomer | (Component B) thermopolymerization initiator | (Component C) plasticizer | (Component D) binder polymer | (Component E) mono-functional (meth)acrylate | (Component F) photo-thermal conversion agent | (Component G) filler |
| Ex. 1 | EBECRYL 230 | Perbutyl Z | Di-n-octyl phthalate | - | IBOA | EC600JD | R8200 |
| Ex. 2 | EBECRYL 230 | Perbutyl Z | Methyl oleate | - | IBOA | EC600JD | R8200 |
| Ex. 3 | EBECRYL 230 | Perbutyl Z | Di-*n*-butyl phthalate | - | IBOA | EC600JD | R8200 |
| Ex. 4 | EBECRYL 230 | Perbutyl Z | Ethyl phthalyl ethyl glycolate | - | IBOA | EC600JD | R8200 |
| Ex. 5 | EBECRYL 230 | Perbutyl Z | Dibutyl adipate | - | IBOA | EC600JD | R8200 |
| Ex. 6 | EBECRYL 230 | Perbutyl Z | Bis(2-butoxyethyl) adipate | - | IBOA | EC600JD | R8200 |
| Ex. 7 | EBECRYL 230 | Perbutyl Z | Tri-*n*-butyl trimellitate | - | IBOA | EC600JD | R8200 |
| Ex. 8 | EBECRYL 230 | Perbutyl Z | Tributyl citrate | - | IBOA | EC600JD | R8200 |
| Ex. 9 | EBECRYL 230 | Perbutyl Z | Tetra-*n*-butyl pyromellitate | - | IBOA | EC600JD | R8200 |
| Ex. 10 | EBECRYL 230 | Perbutyl Z | Benzoic acid octylamide | - | IBOA | EC600JD | R8200 |
| Ex. 11 | EBECRYL 230 | Perbutyl Z | *N*-Butylbenzenesulfonamide | - | IBOA | EC600JD | R8200 |
| Ex. 12 | EBECRYL 230 | Perbutyl Z | Tributyl phosphate | - | IBOA | EC600JD | R8200 |
| Ex. 13 | EBECRYL 230 | Perbutyl Z | Cresyl diphenyl phosphate | - | IBOA | EC600JD | R8200 |
| Ex. 14 | EBECRYL 230 | Perbutyl Z | Tris(2-butoxyethyl) phosophate | - | IBOA | EC600JD | R8200 |
| Ex. 15 | EBECRYL 270 | Perbutyl Z | Di-*n*-butyl phthalate | - | IBOA | EC600JD | R8200 |
| Ex. 16 | EBECRYL 1259 | Perbutyl Z | Di-*n*-butyl phthalate | - | IBOA | EC600JD | R8200 |
| Ex. 17 | EBECRYL 8200 | Perbutyl Z | Di-*n*-butyl phthalate | - | IBOA | EC600JD | R8200 |
| Ex. 18 | EBECRYL 450 | Perbutyl Z | Di-*n*-butyl phthalate | - | IBOA | EC600JD | R8200 |
| Ex. 19 | EBECRYL 884 | Perbutyl Z | Di-*n*-butyl phthalate | - | IBOA | EC600JD | R8200 |
| Ex. 20 | EBECRYL 810 | Perbutyl Z | Di-*n*-butyl phthalate | - | IBOA | EC600JD | R8200 |
| Ex. 21 | EBECRYL 600 | Perbutyl Z | Di-*n*-butyl phthalate | - | IBOA | EC600JD | R8200 |
| Ex. 22 | EBECRYL 3416 | Perbutyl Z | Di-*n*-butyl phthalate | - | IBOA | EC600JD | R8200 |
| Ex. 23 | EBECRYL 112 | Perbutyl Z | Di-*n*-butyl phthalate | - | IBOA | EC600JD | R8200 |
| Ex. 24 | EBECRYL 230 | Cumene hydroperoxide | Di-*n*-butyl phthalate | - | IBOA | EC600JD | R8200 |
| Ex. 25 | EBECRYL 230 | VAm-110 | Di-*n*-butyl phthalate | - | IBOA | EC600JD | R8200 |
| Ex. 26 | EBECRYL 230 | VAm-111 | Di-*n*-butyl phthalate | - | IBOA | EC600JD | R8200 |
| Ex. 27 | EBECRYL 230 | Perbutyl Z | Di-*n*-butyl phthalate | - | - | EC600JD | R8200 |
| Ex. 28 | EBECRYL 230 | Perbutyl Z | Di-*n*-butyl phthalate | - | IBOM | EC600JD | R8200 |
| Ex. 29 | EBECRYL 230 | Perbutyl Z | Di-*n*-butyl phthalate | - | DCPA | EC600JD | R8200 |
| Ex. 30 | EBECRYL 230 | Perbutyl Z | Di-*n*-butyl phthalate | - | DCPM | EC600JD | R8200 |
| Ex. 31 | EBECRYL 230 | Perbutyl Z | Di-*n*-butyl phthalate | - | DDM | EC600JD | R8200 |
| Ex. 32 | EBECRYL 230 | Perbutyl Z | Di-*n*-butyl phthalate | - | IBOA | - | R8200 |
| Ex. 33 | EBECRYL 230 | Perbutyl Z | Di-*n*-butyl phthalate | - | IBOA | #40 | R8200 |
| Ex. 34 | EBECRYL 230 | Perbutyl Z | Di-*n*-butyl phthalate | - | IBOA | EC600JD | - |
| Ex. 35 | EBECRYL 230 | Perbutyl Z | Di-*n*-butyl phthalate | - | IBOA | EC600JD | 200 |
| Ex. 36 | EBECRYL 230 | Perbutyl Z | Di-*n*-butyl phthalate | #3000-2 (1.5 wt%) | IBOA | EC600JD | R8200 |
| Ex. 37 | EBECRYL 230 | Perbutyl Z | Di-*n*-butyl phthalate | - | - | - | - |
| Ex. 38 | EBECRYL 230 | Perbutyl Z | Di-*n*-butyl phthalate | - | - | EC600JD | - |
| Ex. 39 | EBECRYL 230 | Perbutyl Z | Di-*n*-butyl phthalate | - | - | - | R8200 |
| Ex. 40 | EBECRYL 230 | Perbutyl Z | Di-*n*-butyl phthalate | - | IBOA | - | - |
| Ex. 41 | EBECRYL 230 | Perbutyl Z | Di-*n*-butyl phthalate (amount added 1 wt%) | - | IBOA | EC600JD | R8200 |
| Ex. 42 | EBECRYL 230 | Perbutyl Z | Di-*n*-butyl phthalate (amount added 2 wt%) | - | IBOA | EC600JD | R8200 |
| Ex. 43 | EBECRYL 230 | Perbutyl Z | Di-*n*-butyl phthalate (amount added 5 wt%) | - | IBOA | EC600JD | R8200 |
| Ex. 44 | EBECRYL 230 | Perbutyl Z | Di-*n*-butyl phthalate (amount added 40 wt%) | - | IBOA | EC600JD | R8200 |
| Ex. 45 | EBECRYL 230 | Perbutyl Z | Di-*n*-butyl phthalate (amount added 50 wt%) | - | IBOA | EC600JD | R8200 |
| Comp. Ex. 1 | EBECRYL 230 | Perbutyl Z | Polyisoprene | - | IBOA | EC600JD | R8200 |
| Comp. Ex. 2 | EBECRYL 230 | Perbutyl Z | - | - | IBOA | EC600JD | R8200 |
| Comp. Ex. 3 | EBECRYL 230 | Perbutyl Z | Di-*n*-butyl phthalate | #3000-2 (3.0 wt%) | IBOA | EC600JD | R8200 |
| Comp. Ex. 4 | HDDA | Perbutyl Z | Di-*n*-butyl phthalate | - | IBOA | EC600JD | R8200 |

**(Table 2)**

| | Evaluation results | | | | | | |
|---|---|---|---|---|---|---|---|
| | Rinsing properties | Ink laydown | Printing durability (m) | Film thickness (mm) | Shore A hardness (°) | | |
| Ex. 1 | A | A | 2,000 | 1.0 | 70 | | |
| Ex. 2 | B | A | 1,800 | 1.1 | 65 | | |
| Ex. 3 | A | A | 2,000 | 1.1 | 65 | | |
| Ex. 4 | A | A | 1,900 | 1.0 | 60 | | |
| Ex. 5 | A | A | 1,900 | 1.1 | 70 | | |
| Ex. 6 | A | A | 2,000 | 1.1 | 70 | | |
| Ex. 7 | A | A | 1,800 | 0.9 | 65 | | |
| Ex. 8 | A | A | 1,900 | 1.0 | 70 | | |
| Ex. 9 | A | B | 1,700 | 0.9 | 65 | | |
| Ex. 10 | A | B | 1,700 | 1.0 | 65 | | |
| Ex. 11 | A | A | 1,900 | 1.1 | 75 | | |
| Ex. 12 | A | A | 1,900 | 1.0 | 70 | | |
| Ex. 13 | A | A | 2,000 | 0.9 | 65 | | |
| Ex. 14 | A | A | 1,900 | 1.2 | 55 | | |
| Ex. 15 | A | A | 1,800 | 0.9 | 75 | | |
| Ex. 16 | A | A | 1,800 | 1.1 | 60 | | |
| Ex. 17 | A | A | 1,700 | 1.1 | 60 | | |
| Ex. 18 | A | B | 1,500 | 1.0 | 70 | | |
| Ex. 19 | A | B | 1,500 | 1.1 | 75 | | |
| Ex. 20 | A | B | 1,400 | 0.9 | 70 | | |
| Ex. 21 | A | B | 1,400 | 1.0 | 65 | | |
| Ex. 22 | A | B | 1,500 | 1.0 | 65 | | |
| Ex. 23 | A | B | 1,350 | 1.1 | 60 | | |
| Ex. 24 | A | A | 1,800 | 0.9 | 65 | | |
| Ex. 25 | A | A | 1,700 | 1.0 | 65 | | |
| Ex. 26 | A | A | 1,700 | 1.1 | 75 | | |
| Ex. 27 | A | A | 1,500 | 1.0 | 70 | | |
| Ex. 28 | A | A | 2,000 | 1.0 | 70 | | |
| Ex. 29 | A | A | 1,900 | 1.1 | 75 | | |
| Ex. 30 | A | A | 1,900 | 0.9 | 70 | | |
| Ex. 31 | A | A | 1,500 | 1.1 | 70 | | |
| Ex. 32 | A | A | 1,800 | 1.1 | 70 | | |
| Ex. 33 | A | A | 2,000 | 0.9 | 65 | | |
| Ex. 34 | A | A | 1,600 | 1.0 | 70 | | |
| Ex. 35 | A | A | 1,900 | 0.9 | 65 | | |
| Ex. 36 | B | A | 2,000 | 1.1 | 75 | | |
| Ex. 37 | A | A | 1,300 | 1.0 | 70 | | |
| Ex. 38 | A | A | 1,400 | 0.9 | 65 | | |
| Ex. 39 | A | A | 1,500 | 1.1 | 60 | | |
| Ex. 40 | A | A | 1,500 | 1.0 | 65 | | |
| Ex. 41 | B | B | 1,600 | 0.9 | 70 | | |
| Ex. 42 | B | A | 1,800 | 1.2 | 65 | | |
| Ex. 43 | A | A | 2,000 | 1.0 | 60 | | |
| Ex. 44 | A | A | 2,000 | 1.1 | 60 | | |
| Ex. 45 | A | A | 1,800 | 1.0 | 60 | | |
| Comp. Ex. 1 | C | A | 2,000 | 1.0 | 70 | | |
| Comp. Ex. 2 | C | C | 1,100 | 0.9 | 75 | | |
| Comp. Ex. 3 | C | B | 2,000 | 1.1 | 70 | | |
| Comp. Ex. 4 | A | C | 1,200 | 1.0 | 60 | | |

Compounds denoted by abbreviations in Table 1 above, other than those described above for Example 1, were as follows.

### <(Component A) Acrylate oligomer>

The compounds shown in Table 3 below were used in the Examples and Comparative Examples. All thereof were manufactured by Daicel-Cytec Company Ltd. HDDA is a simple difunctional acrylate compound and does not correspond to the acrylate oligomer (Component A).

**(Table 3)**

| Type | Product name | Mw | Number of ethylenically unsaturated groups |
|---|---|---|---|
| Urethane acrylate oligomer | EBECRYL 230 | 5,000 | 2 |
| | EBECRYL 270 | 1,500 | 2 |
| | EBECRYL 1259 | 2,000 | 3 |
| | EBECRYL 8200 | 8,000 | 2 |
| Polyester acrylate oligomer | EBECRYL450 | 1,600 | 6 |
| | EBECRYL 884 | 1,000 | 3 |
| | EBECRYL 810 | 6,000 | 4 |
| Epoxy acrylate oligomer | EBECRYL 600 | 500 | 2 |
| | EBECRYL 3416 | 1,900 | 4 |
| | EBECRYL 112 | 356 | 1 |
| 1,6-Hexanediol diacrylate (HDDA) | | 226 | 2 |

### <(Component B) Thermopolymerization initiator>

Perbutyl Z (t-butylperoxybenzoate, NOF Corporation)
Cumene hydroperoxide (Tokyo Chemical Industry Co., Ltd.)
VAm-110 (2,2'-azobis(*N*-butyl-2-methylpropionamide), Wako Pure Chemical Industries, Ltd.)
VAm-111 (2,2'-azobis(*N*-cyclohexyl-2-methylpropionamide), Wako Pure Chemical Industries, Ltd.)

### <Compounds represented by Formula (1) to Formula (7) (Component C) (plasticizer)>

The compounds shown in Table 4 below were used in the Examples and Comparative Examples.

**(Table 4)**

| Compound name | Source | Corresponding Formula number |
|---|---|---|
| Methyl oleate | Tokyo Chemical Industry Co., Ltd. | 1 |
| Di-*n*-butyl phthalate | Wako Pure Chemical Industries, Ltd. | 2 |
| Di-n-octyl phthalate | Wako Pure Chemical Industries, Ltd. | 2 |
| Ethyl phthalyl ethyl glycolate | Tokyo Chemical Industry Co., Ltd. | 2 |
| Dibutyl adipate | Tokyo Chemical Industry Co., Ltd. | 2 |
| Bis(2-butoxyethyl) adipate | Tokyo Chemical Industry Co., Ltd. | 2 |
| Tri-*n*-butyl trimellitate | Tokyo Chemical Industry Co., Ltd. | 3 |
| Tributyl citrate | Wako Pure Chemical Industries, Ltd. | 3 |
| Tetra-*n*-butyl pyromellitate | Synthesised | 4 |
| Benzoic acid octylamide | Synthesised | 5 |
| *N*-Butylbenzenesulfonamide | Tokyo Chemical Industry Co., Ltd. | 6 |
| Tributyl phosphate | Tokyo Chemical Industry Co., Ltd. | 7 |
| Cresyl diphenyl phosphate | Tokyo Chemical Industry Co., Ltd. | 7 |
| Tris(2-butoxyethyl) phosphate | Tokyo Chemical Industry Co., Ltd. | 7 |

### <Synthesis of tetra-n-butyl pyromellitate>

A pear-shaped flask equipped with a Dean-Stark apparatus was charged with pyromellitic acid (Tokyo Chemical Industry Co., Ltd., 50.00 parts by mass), *n*-butanol (Wako Pure Chemical Industries, Ltd., 200.00 parts by mass), and conc. sulfuric acid (Wako Pure Chemical Industries, Ltd., 5.00 parts by mass). This solution was placed in an oil bath at 110°C and stirred using a magnetic stirrer for 5 hours, and following this excess *n*-butanol was removed by distillation under a flow of nitrogen gas. After 200 parts by mass of ethyl acetate was added to the compositional product thus obtained, it was washed with water and then a saturated aqueous solution of sodium bicarbonate. After magnesium sulfate was added to the organic layer for drying, insolubles were removed by filtration, and the solvent was removed under reduced pressure, thus giving tetra-*n*-butyl pyromellitate (91.03 parts by mass). The structure of the tetra-*n*-butyl pyromellitate was confirmed by ¹H-NMR.

### <Synthesis of benzoic acid octylamide>

A three-necked flask equipped with a stirring blade was charged with benzoyl chloride (Tokyo Chemical Industry Co., Ltd., 30.00 parts by mass) and tetrahydrofuran (Wako Pure Chemical Industries, Ltd., 270 parts by mass), and dissolution was carried out. While cooling this in an ice bath, *n*-octylamine (Tokyo Chemical Industry Co., Ltd., 27.85 parts by mass) was added dropwise. After the dropwise addition was completed, the ice bath was removed, stirring was carried out at room temperature for a further 3 hours, and water (100 parts by mass) was then added. The organic layer was extracted with ethyl acetate, and the organic layer was washed with water, 2M hydrochloric acid, and a saturated aqueous solution of sodium bicarbonate in that order. After magnesium sulfate was added to the organic layer for drying, insolubles were removed by filtration, and the solvent was removed under reduced pressure, thus giving benzoic acid octylamide (44.70 parts by mass). The structure of the benzoic acid octylamide was confirmed by ¹H-NMR.

### <(Component D) Resin having weight-average molecular weight of at least 10,000 (binder polymer)>

#3000-2 (polyvinyl butyral, Denki Kagaku Kogyo Kabushiki Kaisha)

### <(Component E) Monofunctional (meth)acrylate compound>

IBOA (isobornyl acrylate, Tokyo Chemical Industry Co., Ltd.)
IBOM (isobornyl methacrylate, Tokyo Chemical Industry Co., Ltd.)
DCPA (dicyclopentanyl acrylate, Tokyo Chemical Industry Co., Ltd.)
DCPM (dicyclopentanyl methacrylate, Tokyo Chemical Industry Co., Ltd.)
DDM (dodecyl methacrylate, Wako Pure Chemical Industries, Ltd.)

### <(Component F) Photothermal conversion agent>

EC600JD (carbon black, Lion Corporation, average primary particle size 34.0 nm) #40 (carbon black, Mitsubishi Chemical Corporation, arithmetic mean primary particle size 24 nm)

### <(Component G) filler>

R8200 (silica particles, AEROSIL R8200, Nippon Aerosil Co., Ltd.)
200 ((silica particles, AEROSIL 200, Nippon Aerosil Co., Ltd.)

The relief printing plates obtained in Example 3 and Example 32 were subjected to evaluation of engraving depth as described below.

### <Evaluation of engraving depth>

The 'engraving depth' of the relief layer of the relief printing plate was measured as follows. The 'engraving depth' referred to here means the difference between an engraved position (height) and an unengraved position (height) when a cross-section of the relief layer was examined. The 'engraving depth' in the present Examples was measured by examining a cross-section of a relief layer using a VK9510 Ultradepth Color 3D profile measurement microscope (Keyence Corporation).

A large engraving depth means a high engraving sensitivity.

**(Table 5)**

| | Engraving depth (µm) |
|---|---|
| Ex. 3 | 330 |
| Ex. 32 | 292 |

## Claims

1. A composition for laser engraving, the composition comprising:
(Component A) an acrylate oligomer;
(Component B) a thermopolymerization initiator; and
(Component C) at least one of the compounds represented by Formula (1) to Formula (7);
the composition not comprising or comprising at more than 0 mass% but less than 2 mass% relative to the total mass of the composition (Component D) a resin having a weight-average molecular weight of at least 10,000,
R¹-CO₂R² ( 1 )
R³O₂C-L²-CO₂R⁴ ( 2 ) 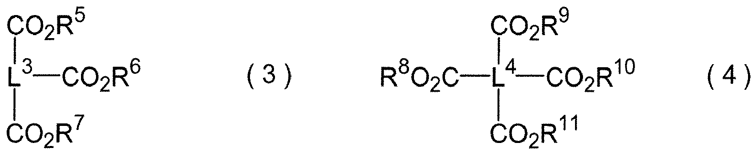
R¹²-CONHR¹³ ( 5 )
R¹⁴-SO₂NHR¹⁵ ( 6 ) 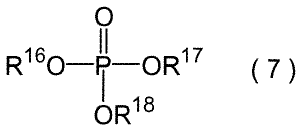
wherein in Formula (1) to Formula (7) R¹ to R¹⁸ independently denote a hydrogen atom, an alkyl group, a substituted alkyl group, an aryl group, or a substituted aryl or heterocyclic group, L² denotes a divalent organic group, L³ denotes a trivalent organic group, and L⁴ denotes a tetravalent organic group.

2. The composition for laser engraving according to Claim 1, wherein Component A has at least two ethylenically unsaturated bonds in the molecule.

3. The composition for laser engraving according to Claim 1 or 2, wherein Component A is a urethane acrylate oligomer.

4. The composition for laser engraving according to any one of Claims 1 to 3, wherein Component B is a peroxide.

5. The composition for laser engraving according to any one of Claims 1 to 4, wherein Component C has a content of 2 to 40 mass% relative to the total mass of the composition.

6. The composition for laser engraving according to any one of Claims 1 to 5, wherein the composition further comprises (Component E) a monofunctional (meth)acrylate compound.

7. The composition for laser engraving according to any one of Claims 1 to 6, wherein the composition further comprises (Component F) a photothermal conversion agent.

8. The composition for laser engraving according to any one of Claims 1 to 6, wherein the composition further comprises (Component G) a filler.

9. The composition for laser engraving according to any one of Claims 1 to 6, wherein the composition further comprises (Component F) a photothermal conversion agent and (Component G) a filler.

10. A relief printing plate precursor for laser engraving, the precursor comprising above a support:
a relief-forming layer formed from the composition for laser engraving according to any one of Claims 1 to 9.

11. A relief printing plate precursor for laser engraving, the precursor comprising above a support:
a crosslinked relief-forming layer formed by thermally crosslinking a relief-forming layer formed from the composition for laser engraving according to any one of Claims 1 to 9.

12. A process for producing a relief printing plate precursor for laser engraving, the process comprising:
a layer formation step of forming a relief-forming layer from the composition for laser engraving according to any one of Claims 1 to 9; and
a crosslinking step of crosslinking the relief-forming layer by means of heat to thus obtain a relief printing plate precursor comprising a crosslinked relief-forming layer.

13. A process for making a relief printing plate, the process comprising:
a layer formation step of forming a relief-forming layer from the composition for laser engraving according to any one of Claims 1 to 9;
a crosslinking step of crosslinking the relief-forming layer by means of heat to thus obtain a relief printing plate precursor comprising a crosslinked relief-forming layer; and
an engraving step of laser engraving the relief printing plate precursor comprising the crosslinked relief-forming layer to thus form a relief layer.

14. A relief printing plate comprising a relief layer made by the process according to Claim 13.

15. The relief printing plate according to Claim 14, wherein the relief layer has a thickness of at least 0.05 mm but no greater than 10 mm.

16. The relief printing plate according to Claim 14 or 15, wherein the relief layer has a Shore A hardness of at least 50° but no greater than 90°.
